# EUROPEAN PATENT SPECIFICATION

(11) **EP 3 243 329 B1**
(45) Date of publication and mention of the grant of the patent: **13.11.2019**
(21) Application number: 15876801.0
(22) Date of filing: 22.12.2015
(51) Int. Cl.: H04N 19/132, H04N 19/136, H04N 19/156, H04N 19/167, H04N 19/31, H04N 19/162, H04N 19/187, H04N 19/587

(54) **IMAGE DECODING APPARATUS, IMAGE DECODING METHOD, AND STORAGE MEDIUM**
BILDDECODIERUNGSVORRICHTUNG, BILDDECODIERUNGSVERFAHREN UND SPEICHERMEDIUM
APPAREIL DE DÉCODAGE D'IMAGES, PROCÉDÉ DE DÉCODAGE D'IMAGES, ET SUPPORT D'INFORMATIONS

(30) Priority: 07.01.2015 JP 2015001682
(43) Date of publication of application: 15.11.2017
(73) Proprietor: Canon Kabushiki Kaisha, Tokyo 146-8501 (JP)
(72) Inventor: MAEDA, Mitsuru, Tokyo 146-8501 (JP); OKAWA, Koji, Tokyo 146-8501 (JP)
(74) Representative: Uffindell, Christine Helen
(86) International application number: PCT/JP2015/006415
(87) International publication number: WO 2016/110922

(56) References cited:
- EP-A2- 0 961 496
- JP-A- H07 288 806
- JP-A- H10 290 453
- JP-A- 2006 080 832
- JP-A- 2015 037 223
- US-A1- 2003 206 659
- US-A1- 2004 136 596
- US-A1- 2004 136 596
- US-A1- 2012 183 077
- HATTORI S ET AL: "HLS: Extensions to Temporal Motion-constrained tile sets SEI message", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0051-v2, 16 January 2014 (2014-01-16), XP030115516,

## Description

### Technical Field

The present invention relates to an image decoding apparatus, an image decoding method, and a storage medium, and relates particularly to an image decoding technology using temporal scalable coding.

### Background Art

A technology regarding image-data compression coding (hereinafter referred to as coding) is used in order to transmit, store, and play back a moving image. As moving-image coding technologies, for example, H.264/MPEG-4 AVC (hereinafter referred to as H.264) and High Efficiency Video Coding (hereinafter referred to as HEVC) are known.

In such moving-image coding technologies, scalable video coding by which a moving image is encoded in a layered manner from low quality to high quality is employed in the extended specifications. Scalable video coding may be classified into spatial scalability, temporal scalability, and signal-to-noise ratio (SNR) scalability in terms of type of information to be layered. Here, temporal scalability is a technology for performing layering in accordance with a temporal scale change, that is, the number of frames per unit time period in image coding (a frame rate of a moving image). A frame rate is adjustable by cutting out part of data having a layered structure. That is, the frame rate of the moving image may be flexibly switched to another by generating a moving image capable of realizing a plurality of frame rates, and by taking restrictions that differ from environment to environment such as network transmission or playback (decoding) processing into consideration.

In order to realize hierarchical coding supporting the above-described temporal scalability, it is ruled that frames of a moving image are provided with temporal layer identifiers (Temporal IDs), which represent information for identifying the layers in temporal layers, and are encoded. The frames of each layer are structured to be capable of being played back by referring to the value of the set Temporal ID and frames having Temporal IDs whose values are smaller than the value of the set Temporal ID. Then, temporal layers are selected in accordance with this Temporal ID, and playback (decoding and display) is performed.

In addition, regarding the above-described moving-image coding technology, a technology has been proposed in which the entire screen view of a video is not encoded at a uniform frame rate, the frame rate for a specific region is increased, and only the frame rate for a non-specific region is reduced (PTL 1). In PTL 1, it is described that, in a case where videos input from a plurality of surveillance cameras are compressed, a video compression unit is used that is configured to set, for each surveillance camera, a frame rate in accordance with the degree of importance of images input from the surveillance camera, and produce video data having the set frame rate.

However, for the non-specific region encoded at a lowered frame rate, control of the frame rate may be restricted in the above-described related art when a reception apparatus performs decoding and playback. For example, a region treated as a non-specific region at the time of encoding is unable to be decoded and played back at a frame rate higher than the frame rate used at the time of encoding on the reception device side. That is, a desired frame rate may not be acquired at the time of decoding and playback in the related art. That is, an image decoding apparatus capable of decoding a moving image at an appropriate frame rate at the time of decoding is desired.

### Citation List

### Patent Literature

PTL 1: Japanese Patent Laid-Open No. 2008-167101

### Summary of Invention

### Solution to Problem

The present invention provides an image decoding apparatus, as defined by claim 1.

Further features of the present invention will become apparent from the following description of embodiments with reference to the attached drawings.

According to the present invention, an image decoding apparatus is able to decode, at an appropriate frame rate, a moving image on which temporal scalable coding has been performed.

### Brief Description of Drawings

[fig.1] Fig. 1 is a block diagram illustrating the configuration of an image decoding apparatus according to a first embodiment.
[fig.2]Fig. 2 is a block diagram illustrating the configuration of a rate calculation unit according to the first embodiment.
[fig.3]Fig. 3 is a diagram illustrating an example of encoded data input to an image decoding apparatus.
[fig.4A]Fig. 4A is a diagram illustrating an example of the relationship between the number of decoding-target tiles and frame rate regarding the processing performance of the image decoding apparatus.
[fig.4B]Fig. 4B is a diagram illustrating an example of the relationship between the number of decoding-target tiles and frame rate regarding the processing performance of the image decoding apparatus.
[fig.5A]Fig. 5A is a diagram illustrating an example of frame tile division.
[fig.5B]Fig. 5B is a diagram illustrating the example of frame tile division and an example of regions of interest.
[fig.5C]Fig. 5C is a diagram illustrating the example of frame tile division and an example of a region of interest.
[fig.5D]Fig. 5D is a diagram illustrating the example of frame tile division and an example of regions of interest.
[fig.6A]Fig. 6A is a flowchart illustrating part of a decoding process according to the first embodiment.
[fig.6B]Fig. 6B is a flowchart illustrating the other part of the decoding process according to the first embodiment.
[fig.7]Fig. 7 is a block diagram illustrating the configuration of an image decoding apparatus according to a second embodiment.
[fig.8]Fig. 8 is a block diagram illustrating the configuration of a rate calculation unit according to the second embodiment.
[fig.9A]Fig. 9A is a diagram illustrating an example of the relationship between the number of decoding-target tiles and frame rate regarding the processing performance of the image decoding apparatus.
[fig.9B]Fig. 9B is a diagram illustrating an example of the relationship between the number of decoding-target tiles and frame rate regarding the processing performance of the image decoding apparatus.
[fig.10A]Fig. 10A is a flowchart illustrating part of a decoding process according to the second embodiment.
[fig.10B]Fig. 10B is a flowchart illustrating the other part of the decoding process according to the second embodiment.
[fig. 11]Fig. 11 is a block diagram illustrating another configuration of an image decoding apparatus according to the second embodiment.
[fig. 12]Fig. 12 is a block diagram illustrating the configuration of an image decoding apparatus according to a third embodiment.
[fig.13]Fig. 13 is a block diagram illustrating the configuration of a rate calculation unit according to the third embodiment.
[fig.14A]Fig. 14A is a flowchart illustrating part of a decoding process according to the third embodiment.
[fig.14B]Fig. 14B is a flowchart illustrating the other part of the decoding process according to the third embodiment.
[fig.15]Fig. 15 is a block diagram illustrating an example of a hardware configuration of a computer capable of being applied to image decoding apparatuses.

### Description of Embodiments

In the following, a description will be made in detail in accordance with an example of an embodiment of the present invention with reference to the attached drawings. Note that configurations illustrated in the following embodiments are mere examples, and the present invention is not limited to the illustrated configurations.

In the following embodiments, encoded data (a bit stream) generated by performing temporal scalable coding (hierarchical coding supporting temporal scalability) on a moving image is input to an image decoding apparatus. Here, temporal scalable coding is a method that may be used in H.264 and High Efficiency Video Coding (HEVC), for example, as disclosed by US 2012/183077 A1 (HONG DANNY [US] ET AL) 19 July 2012 (2012-07-19) . Moreover, temporal scalable coding makes it possible to express a moving image at a plurality of frame rates (picture rates) and makes it possible to provide the function of selecting a frame rate. Here, in the following embodiments, suppose that the encoded data to be input to the image decoding apparatus is data encoded using HEVC.

In order to realize the above-described temporal scalable coding, it is ruled that frames of a moving image are not provided with temporal layer levels (Temporal IDs, temporal layer identifiers), which represent information for identifying layers in temporal layers. The frames of each layer of temporal scalability are structured to be capable of being played back by referring to the value of a temporal layer level, which has been set for the frames, and frames having temporal layer levels whose values are smaller than the value of the temporal layer level. Then, temporal layers are selected in accordance with this temporal layer level, and playback (decoding and display) is performed.

In addition, when one frame (picture) is rectangularly divided into tiles, it is possible to perform encoding and decoding on a tile-by-tile basis in encoding-decoding processing using HEVC. In addition, in HEVC, tiles are defined with which only tiles, which are part of consecutive frames of a moving image, may be independently encoded and decoded on a sequence-by-sequence basis (hereinafter referred to as independent decoding tiles). Then, independent decoding tiles (a group of independent decoding tiles) constituted by one or more tiles within a frame are referred to as temporal_motion_constrained_tile_sets (hereinafter referred to as TMCTS). Then, in HEVC, independence of encoding and decoding may be ensured by treating only tiles located at positions that relatively match the positions of the tiles included in TMCTS as targets for inter-frame prediction and by performing prediction without using (referring to) tiles located at positions that do not relatively match the positions of the tiles included in the TMCTS. Note that information regarding the positions of the tiles included in TMCTS may be inserted into a supplemental enhancement information (SEI) message in a header portion of encoded data, as specified, for example, in HATTORI S ET AL: "HLS: Extensions to Temporal Motion-constrained tile sets SEI message",16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/,no. JCTVC-P0051-v2, 16 January 2014.

### First Embodiment

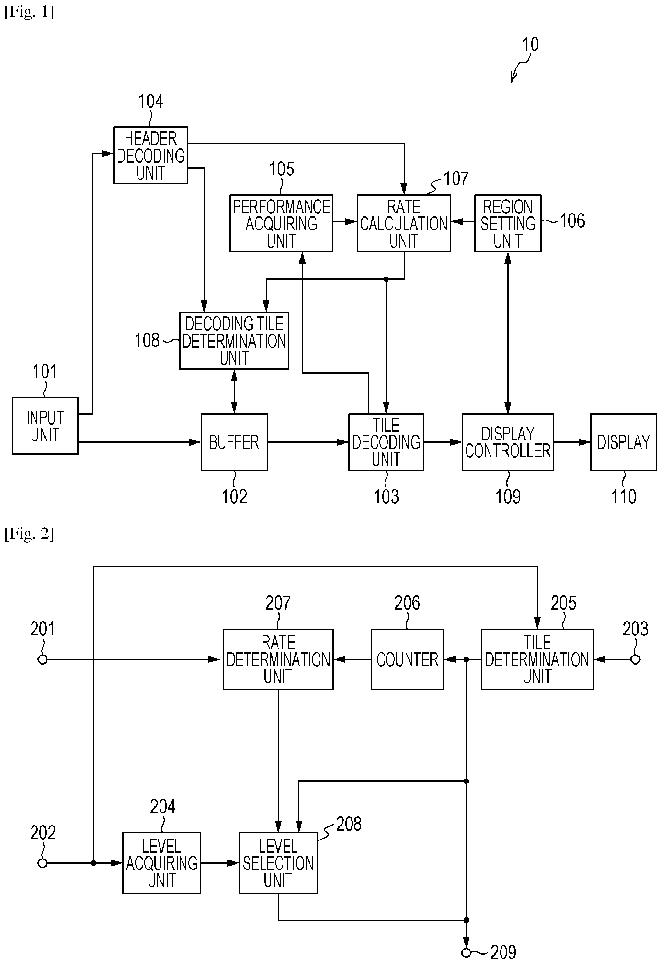

In the following, an image decoding apparatus according to the present embodiment will be described with reference to the drawings. First, the configuration of the image decoding apparatus according to the present embodiment will be described using Fig. 1. Fig. 1 is a block diagram illustrating the configuration of an image decoding apparatus 10 according to the present embodiment.

In Fig. 1, an input unit 101 inputs encoded data generated by performing temporal scalable coding on a moving image to various subsequent processing units. The encoded data output from the input unit 101 is input to a buffer 102, and the buffer 102 stores the encoded data, on which temporal scalable coding has been performed, on a tile-by-tile basis. A tile decoding unit 103 decodes, on a tile-by-tile basis, the encoded data output from the buffer 102, and plays back decoded images. Note that the tile decoding unit 103 has processing performance (decoding performance) to decode one frame (picture) or more within a unit time period (one second) in the present embodiment. However, the decoding performance of the tile decoding unit 103 is not limited to this, and may be anything that indicates the number of frames capable of being decoded within a certain time period. A display controller 109 performs control such that a decoded image decoded by the tile decoding unit 103 is displayed on a display 110. The display 110 performs display under control of the display controller 109. A header decoding unit 104 decodes a header portion of encoded data output from the input unit 101, and outputs information obtained by performing decoding to subsequent processing units. A performance acquiring unit 105 acquires performance information indicating the decoding processing performance (capability) of the tile decoding unit 103. Note that the performance information indicates information indicating the load of a central processing unit (CPU), information indicating the capacity of a memory, and the like.

A region setting unit 106 sets a specified region specified by a user in an image, a region of interest such as a characteristic region detected by a detector (not illustrated), or both. For example, the region setting unit 106 is capable of setting a region of interest when the display 110 is provided with a touch panel and a user specifies the position and size of a region of interest on the touch panel. In addition, the region setting unit 106 may output information indicating the set region of interest to the display controller 109, and the display controller 109 may perform control such that the region of interest is displayed on the display 110. In addition, in the case where a user has set a region of interest or specified change of a region of interest or where a characteristic region is detected by the detector (not illustrated) while an image is being decoded by the image decoding apparatus 10, the region setting unit 106 sends a region setting request to a rate calculation unit 107. Here, in the present embodiment, a region setting request includes at least one of information regarding specification performed by a user and information regarding detection. In addition, the region setting unit 106 sends region-of-interest information regarding a setting status of a region of interest to the rate calculation unit 107. Here, the region-of-interest information includes at least one of information regarding the number of regions of interest, information regarding the position of a region of interest, and information regarding the size of a region of interest.

The rate calculation unit 107 calculates a frame rate to be used in the case where one entire frame (picture) of a moving image is displayed (in the case of entire-view display), and a frame rate to be used in the case where a region of interest within a frame is displayed (in the case of partial-view display). The rate calculation unit 107 acquires a region setting request and region-of-interest information from the region setting unit 106. In addition, the rate calculation unit 107 acquires performance information regarding the tile decoding unit 103 from the performance acquiring unit 105, and acquires encoded data regarding a temporal layer level from the header decoding unit 104. Then, the rate calculation unit 107 calculates a frame rate of the moving image, which is a display target, in accordance with at least any of the above-described pieces of information acquired from the region setting unit 106, the performance acquiring unit 105, and the header decoding unit 104. A decoding tile determination unit 108 selects a temporal layer level and tiles to be decoded from among pieces of encoded data stored in the buffer 102 in accordance with information indicating a frame rate calculated by the rate calculation unit 107.

Next, the configuration of the rate calculation unit 107 will be described in detail using Fig. 2. The performance information indicating the decoding processing performance of the tile decoding unit 103 is input to a terminal 201 from the performance acquiring unit 105. Information regarding an image, information regarding temporal layers, and information regarding tiles are input to a terminal 202 from the header decoding unit 104. Note that, information regarding an image indicates information regarding characteristics of the image such as the size of a frame, and information regarding temporal layers indicates the number of temporal layers, information regarding frame rates of respective temporal layer levels, or both in the present embodiment. In addition, information regarding tiles indicates information regarding, for example, the number of tiles obtained by dividing a frame, division positions, and at least one of the number of independent decoding tiles and the number of independent decoding tiles within a frame in the present embodiment. Region-of-interest information is input to a terminal 203 from the region setting unit 106. A level acquiring unit 204 receives information regarding an image, information regarding temporal layers, and information regarding tiles from the terminal 202. The level acquiring unit 204 acquires (calculates) frame rates of the respective temporal layer levels. A tile determination unit 205 receives region-of-interest information from the terminal 203, and receives information regarding tiles from the terminal 202. Then, the tile determination unit 205 determines decoding-target tiles regarding a case where a moving image is displayed in an entire-view display manner or a case where the moving image is displayed in a partial-view display manner in accordance with a region of interest, and outputs information regarding the determined decoding-target tiles to a counter 206.

The counter 206 counts the number of the decoding-target tiles determined by the tile determination unit 205. Then, the counter 206 outputs count information based on a count result to a rate determination unit 207. The rate determination unit 207 calculates a frame rate of a decoded moving image used when display (output) is performed on the display 110, in accordance with the performance information input from the terminal 201 and the count information input from the counter 206. Then, the rate determination unit 207 outputs information regarding the determined frame rate to a level selection unit 208. The level selection unit 208 selects (determines) a temporal layer level for an image that has been decoded and is to be output to the display 110 (a decoded image), in accordance with the frame rate input from the rate determination unit 207. Information regarding tiles necessary for decoding and determined by the tile determination unit 205 and information regarding the temporal layer level selected by the level selection unit 208 are output from a terminal 209 to the decoding tile determination unit 108 and the tile decoding unit 103. Here, the information regarding tiles necessary for decoding indicates information regarding the number and positions of decoding-target tiles.

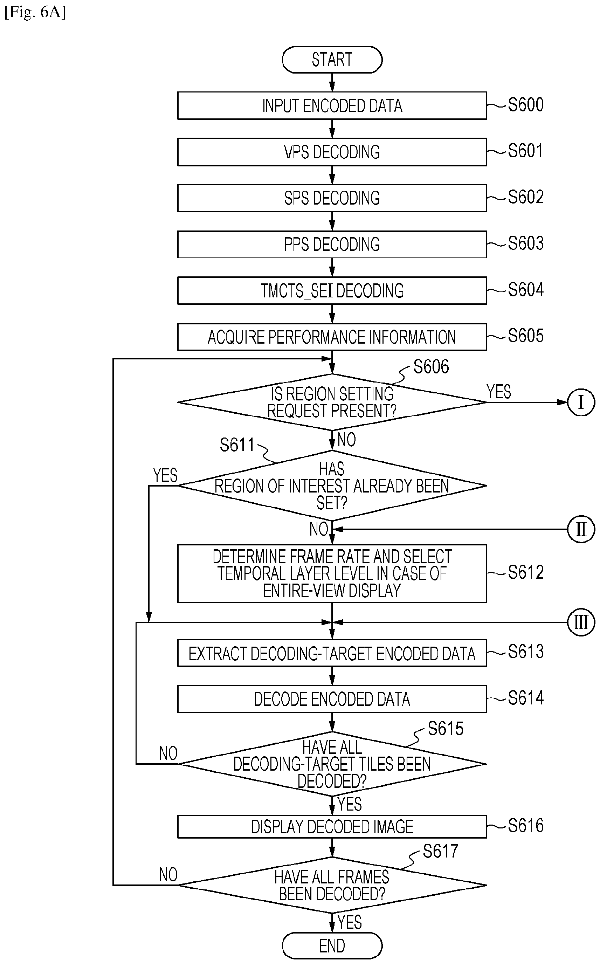

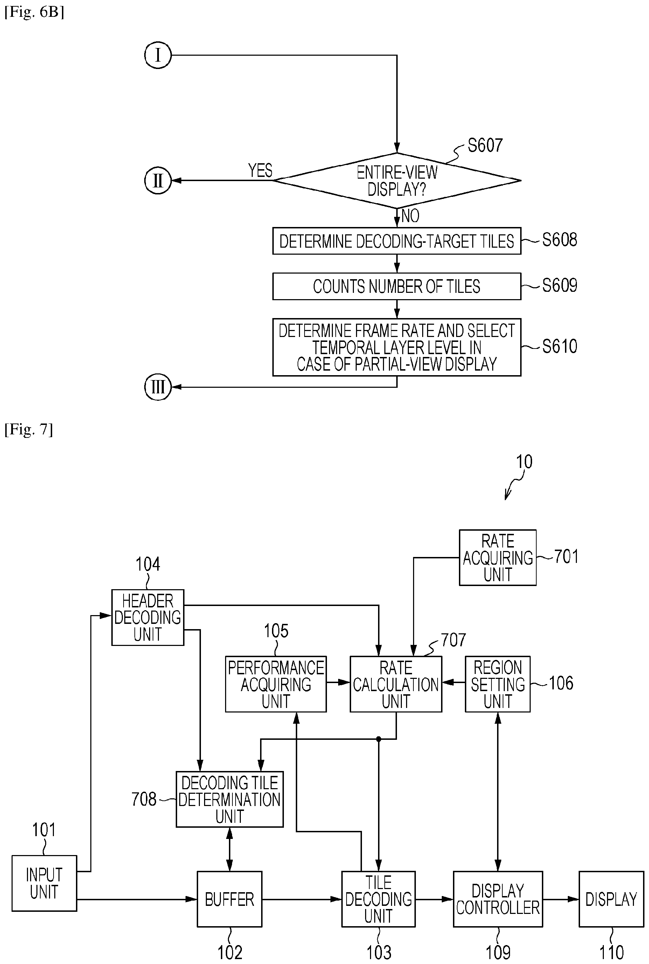

Next, a decoding processing operation of the image decoding apparatus 10 in the present embodiment will be described using Figs. 6A and 6B. Figs. 6A and 6B are a flowchart illustrating the decoding processing operation of the image decoding apparatus 10 according to the present embodiment. The image decoding apparatus 10 starts a decoding process upon receiving encoded data.

In step S600, the input unit 101 successively acquires pieces of encoded data input to the image decoding apparatus 10, and separates the acquired pieces of encoded data into encoded data corresponding to a header (hereinafter referred to as header data) and encoded data corresponding to tiles of an image (tile data). Then, the input unit 101 inputs the header data to the header decoding unit 104, and the tile data to the buffer 102.

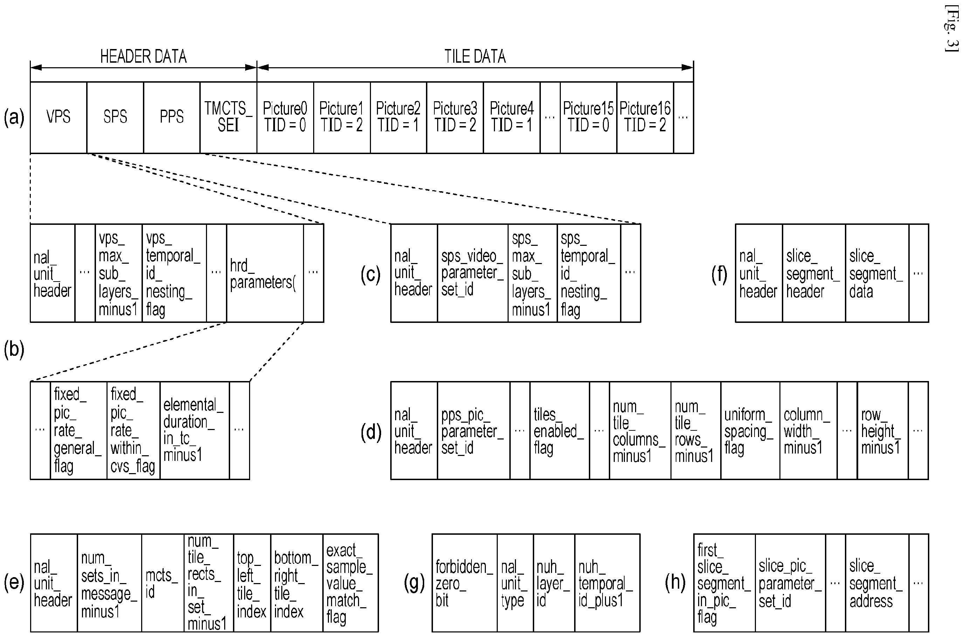

Here, an example of encoded data input to the input unit 101 is illustrated in Fig. 3. Note that, as illustrated in Fig. 3, a description will be made using, as an example, encoded data encoded using HEVC as a coding method in the present embodiment; however, the coding method is not limited to this. In addition, the encoded data illustrated in Fig. 3 is encoded data in the case where the number of temporal layer levels is three; however, the encoded data is not limited to this number of temporal layer levels.

Fig. 3(a) is a diagram illustrating the entire encoded data, and the left side is the top of the encoded data. Fig. 3(b) is a diagram illustrating video_parameter_set (VPS) included in header data illustrated in Fig. 3(a). Fig. 3(c) is a diagram illustrating Sequence Parameter Set (SPS) included in the header data illustrated in Fig. 3(a). Fig. 3(d) is a diagram illustrating Picture Parameter Set (PPS) included in the header data illustrated in Fig. 3(a). Fig. 3(e) is a diagram illustrating temporal-motion_constrained_tile_sets_Supplemental Enhancement Information (TMCTS_SEI) included in the header data illustrated in Fig. 3(a).

Next, in step S601, the header decoding unit 104 decodes the VPS of the header data input from the input unit 101. Here, the VPS includes nal_unit_header, which is the header portion of a Network Abstraction Layer (NAL) unit, at the top thereof, and thereafter encoded data of the VPS as illustrated in Fig. 3(b). In particular, the encoded data of the VPS includes a vps_max_sub_layers_minus1 code. The value of this vps_max_sub_layers_minus1 code represents the number of temporal layer levels of the encoded data. For example, in the case where the number of temporal layer levels is 1, 2, 3,..., the value of the vps_max_sub_layers_minus1 code is 0, 1, 2,.... Since the number of temporal layer levels is three in the present embodiment, the value of the vps_max_sub_layers_minus1 code is 2. Furthermore, the VPS includes hrd_parameters. The hrd_parameters includes a fixed_pic_rate_general_flag code. When the value of the fixed_pic_rate_general_flag code is 1, it is indicated that frame time intervals are constant for each temporal layer. When the value of the fixed_pic_rate_general_flag code is 0, it is indicated that frame time intervals are variable for each temporal layer. Then, when the value of the fixed_pic_rate_general_flag code is 1, the value of an elemental_duration_in_tc_minus1 code represents frame time intervals for each temporal layer.

Next, in step S602, the header decoding unit 104 decodes the SPS of the header data input from the input unit 101. Here, the SPS includes nal_unit_header, which is the header portion of the NAL unit, at the top thereof as illustrated in Fig. 3(c). Furthermore, the SPS includes a sps_video_parameter_set_id code and a sps_max_sub_layers_minus1 code after the nal_unit_header. Note that the value of the sps_max_sub_layers_minus1 code represents the number of temporal layer levels within a sequence. The number of temporal layer levels is three within a sequence in the present embodiment, the value of the vps_max_sub_layers_minus1 code is two.

In step S603, the header decoding unit 104 decodes the PPS of the header data input from the input unit 101. As illustrated in Fig. 3(d), the PPS includes nal_unit_header, which is the header portion of the NAL unit, at the top thereof, and thereafter pps_pic_parameter_set_id and information regarding tiles. The value of a tiles_enabled_flag code represents whether or not the encoded data input to the image decoding apparatus 10 is data encoded on a tile-by-tile basis. When the value of the tiles_enabled_flag code is 1, the encoded data input to the image decoding apparatus 10 is data encoded on a tile-by-tile basis. When the value of the tiles_enabled_flag code is 0, the encoded data input to the image decoding apparatus 10 is not data encoded on a tile-by-tile basis. In the present embodiment, the value of the tiles_enabled_flag code is 1 (that is, the encoded data input to the image decoding apparatus 10 is data encoded on a tile-by-tile basis). Furthermore, the PPS includes a num_tile_columns_minus1 code, a num_tile_rows_minus1 code, a column_width_minus1 code, and a row_height_minus1 code. Here, the value of the num_tile_columns_minus1 code represents the number of times of division of an image in a horizontal direction, and the value of the num_tile_rows_minus1 code represents the number of times of division regarding tiles in a vertical direction. The value of the column_width_minus1 code represents the size of each tile in a horizontal direction, and the value of the row_height_minus1 code represents the size of each tile in a vertical direction.

Next, in step S604, the header decoding unit 104 decodes the TMCTS_SEI of the header data input from the input unit 101. Here, as illustrated in Fig. 3(e), the TMCTS_SEI includes nal_unit_header, which is the header portion of the NAL unit, at the top thereof, and thereafter a num_sets_in_message_minus1 code. The value of the num_sets_in_message_minus1 code represents the number of groups of independent decoding tiles including one or a plurality of independent decoding tiles, among tiles of the encoded data input to the input unit 101. The num_sets_in_message_minus1 code is followed by encoded data including information regarding each independent decoding tile. Tmcts_id represents each group of independent decoding tiles. Furthermore, the value of a num_tile_rects_in_set_minus1 code represents the number of independent decoding tiles included in each group of independent decoding tiles. Note that all tiles corresponding the tile data input to the input unit 101 are groups of independent decoding tiles in the present embodiment. That is, in the present embodiment, each group of independent decoding tiles within a frame includes only one independent decoding tile. Note that, the number of independent decoding tiles included in each group of independent decoding tiles is not limited to this, and one group of independent decoding tiles may include a plurality of independent decoding tiles. Alternatively, one entire frame does not have to be constituted by independent decoding tiles. In addition, subsequently, the value of a top_left_tile_index code and the value of a bottom_right_tile_index code represent the positions of tiles included in the group of independent decoding tiles.

In the above-described steps S601 to 604, the header data decoded by the header decoding unit 104 is input to subsequent processing units as necessary. In particular, the information regarding the temporal layer level and the information regarding independent decoding tiles in the decoded header data are input to the rate calculation unit 107 and the decoding tile determination unit 108.

Next, in step S605, the performance acquiring unit 105 acquires performance information regarding the decoding processing performance of the tile decoding unit 103. For example, the performance information includes, as performance information regarding the CPU, information indicating the number of tiles capable of being decoded by the tile decoding unit 103 within a unit time period in the present embodiment. Note that in the present embodiment, the tiles of the encoded data input to the image decoding apparatus 10 are the same in size, and information regarding the size of each tile has been shared by the image decoding apparatus 10 and an image encoding apparatus, not illustrated, in advance. Note that the performance information is not limited to this, and the performance information may also include information indicating the number of pixels capable of being decoded within a unit time period, the size of a region, and the size of data. In addition, the tiles of the encoded data input to the image decoding apparatus 10 does not have to be the same in size.

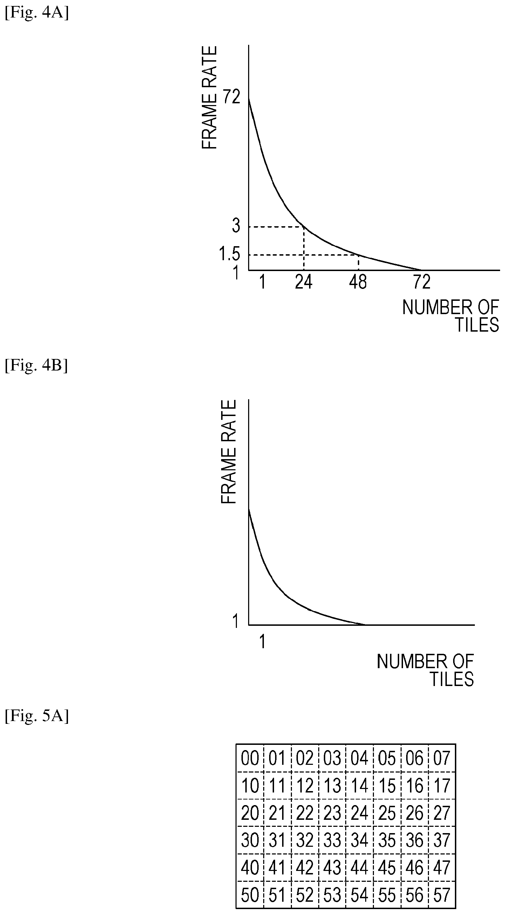

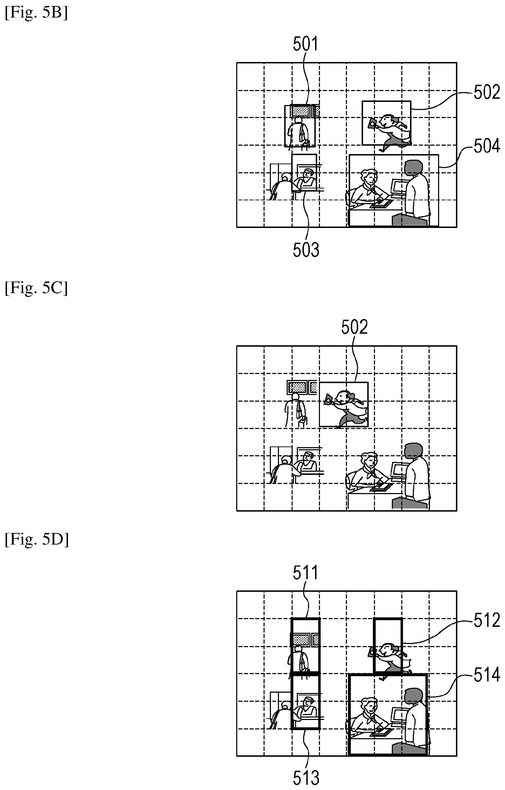

Here, Fig. 5A illustrates a scene of tile division of one frame (picture). As illustrated in Fig. 5A, one frame is divided into eight tiles in a horizontal direction and into six tiles in a vertical direction in the present embodiment. All the tiles are equal in size. In the present embodiment, as illustrated in Fig. 5A, the tiles of one frame (picture) are numbered from the upper left to the lower right. In addition, for the sake of description, the tile decoding unit 103 of the image decoding apparatus 10 has processing performance with which it is possible to decode 72 tiles per second in the present embodiment. Note that a calculation method for the processing performance of and the processing performance of the image decoding apparatus 10 are not limited to these.

Next, in step S606, the rate calculation unit 107 determines whether or not a region setting request has been acquired from the region setting unit 106. In the case where it is determined that a region setting request has been acquired, the process proceeds to processing in step S607. In the case where it is determined that a region setting request has not been acquired, the process proceeds to processing in step S611.

First, a case will be described where the rate calculation unit 107 determines in step S606 that a region setting request has not been acquired from the region setting unit 106 (NO in step S606) and the process proceeds to processing in step S611. Note that the image decoding apparatus 10 decodes encoded data (tile data) of the top frame of a sequence included in the encoded data input to the input unit 101. A decoded image is not displayed on the display 110, and the user has not yet specified a region of interest before decoding of the encoded data of the top frame. That is, the region setting unit 106 has not acquired a region setting request, and the number of regions of interest is zero.

In step S611, the tile determination unit 205 determines whether or not a region of interest has already been set. In the case where a region of interest has not yet been set, the process proceeds to processing in step S612. In the case where a region of interest has already been set, the process proceeds to processing in step S613. As described above, since a region of interest is not set for the top frame in the present embodiment, the process proceeds to processing in step S612. In this manner, in the case where the region setting unit 106 has not acquired a region setting request, and the tile determination unit 205 has determined that a region of interest has not yet been set, the process proceeds to step S612 in order that the image decoding apparatus 10 decodes the encoded data input thereto and performs entire-view display.

In step S612, the tile determination unit 205 determines tiles of the entire frame to be decoding-target tiles. Then, the tile determination unit 205 outputs information regarding the decoding-target tiles from the terminal 209 to subsequent processing units. As illustrated in Fig. 5A, 1 frame includes 48 tiles having tile numbers from 00 to 57 in the present embodiment. That is, in step S612, the tile determination unit 205 outputs, as the information regarding the decoding-target tiles, information indicating that the decoding-target tiles have tile numbers from 00 to 57 and information indicating that the number of the decoding-target tiles is 48 to the subsequent processing units.

Furthermore, in step S612, the rate determination unit 207 determines a frame rate of a moving image, which is a display target, in accordance with the number of the decoding-target tiles determined by the tile determination unit 205 and the performance information regarding the processing performance of the tile decoding unit 103 input from the terminal 201. Furthermore, in step S612, the level selection unit 208 selects a temporal layer level for a decoded image in accordance with the frame rate determined by the rate determination unit 207 and frame rates of respective temporal layer levels acquired by the level acquiring unit 204.

In the following, a determination process for a frame rate of a moving image, which is a display target, and a selection process for a temporal layer level for a decoded image in step S612 will be described in detail.

First, the determination process for a frame rate of a moving image, which is a display target, will be described. In an example of a picture of one frame divided into tiles illustrated in Fig. 5A of the present embodiment, the tile determination unit 205 performs decoding from the upper left tile (the tile number 00) of the picture to the lower right tile (the tile number 57) of the picture. Then, the counter 206 counts the number of the decoding-target tiles determined by the tile determination unit 205, and outputs count information based on a count result to the rate determination unit 207. As illustrated in Fig. 5A, the number of the decoding-target tiles is 48 in the present embodiment. The rate determination unit 207 calculates (determines) a frame rate of a moving image, which is a display target, in accordance with the performance information input from the terminal 201 and the count information input from the counter 206. Here, Fig. 4A illustrates the relationship between the number of decoding-target tiles and a frame rate in accordance with the decoding processing performance of the tile decoding unit 103 according to the present embodiment. Note that since the number of the decoding-target tiles is 48 for the top frame in the present embodiment, the frame rate is 72/48 = 1.5 frames/s. Then, the rate determination unit 207 outputs, to the level selection unit 208, information regarding the frame rate of the moving image, which is a display target, determined in this manner in accordance with the performance information and the count information.

Next, the selection process for a temporal layer level for a decoded image will be described. The level acquiring unit 204 acquires, via the terminal 202, information regarding an image decoded by the header decoding unit 104, information regarding temporal layers, and information regarding tiles, and calculates (acquires) frame rates of the respective temporal layer levels in accordance with these pieces of information.

The level acquiring unit 204 outputs the calculated frame rates of the respective temporal layer levels to the level selection unit 208. The level selection unit 208 selects (determines) a temporal layer level for a decoded image in accordance with the frame rates of the respective temporal layer levels input from the level acquiring unit 204 and the frame rate of the moving image, which is a display target, input from the rate determination unit 207. Here, the level selection unit 208 selects a temporal layer level having the highest frame rate among frame rates of respective temporal layer levels that have been acquired by the level acquiring unit 204 and that are lower than or equal to the frame rate determined by the rate determination unit 207 in the present embodiment. Then, the level selection unit 208 outputs, via the terminal 209, information regarding the selected temporal layer level for the decoded image to subsequent processing units.

Specifically, in the case where frames of temporal layer levels 0, 1, and 2 are decoded in the present embodiment, frame time intervals are 2500 Tick for each temporal layer level. Note that 1 Tick is a unit obtained by dividing 1 second by 30000. That is, each frame time interval is 1/12 seconds. The frame rate is 12 frames/s in the case where decoding has been completed up to the temporal layer level 2 (the temporal layer levels 0, 1, and 2). In addition, the frame rate is 6 frames/s in the case where decoding has been completed up to the temporal layer level 1 (the temporal layer levels 0 and 1), which is half the frame rate obtained in the case of the temporal layer level 2, and display is performed with this frame rate. In addition, the frame rate is 1 frame/s for the temporal layer level 0 in the present embodiment. Furthermore, as described in the above-described determination process for a frame rate, the frame rate determined by the rate determination unit 207 is 1.5 frames/s in the present embodiment. Thus, the level selection unit 208 selects only the temporal layer level 0, which has a frame rate of 1 frame/s, as a temporal layer level for a decoded image.

As described above, the tile determination unit 205 determines a frame rate of a moving image, which is a display target, and the level selection unit 208 selects a temporal layer level for a decoded image in step S612 of the present embodiment. Furthermore, in step S612, the tile determination unit 205 and the level selection unit 208 output information regarding the determined frame rate and information regarding the selected temporal layer level via the terminal 209 to subsequent processing units (the decoding tile determination unit 108 and the tile decoding unit 103).

Next, in step 613, the decoding tile determination unit 108 reads out decoding-target encoded data in order of tiles in accordance with the information regarding the temporal layer level selected by the level selection unit 208 and the information regarding the decoding-target tiles determined by the tile determination unit 205. That is, the decoding tile determination unit 108 specifies, for each tile, a storage location in the buffer 102 so that the decoding-target encoded data (encoded data of tiles necessary for decoding) is read out in order of tiles. Then, the buffer 102 reads out the encoded data of the tile from the specified storage location, and outputs the encoded data to the tile decoding unit 103.

In step S614, the tile decoding unit 103 decodes the decoding-target encoded data input from the buffer 102. Furthermore, the tile decoding unit 103 reconstructs a decoded image in accordance with the information regarding the decoding-target tiles output from the tile determination unit 205 of the rate calculation unit 107 via the terminal 209.

In step S615, the tile decoding unit 103 determines whether or not all the decoding-target tiles have been decoded. In the case where it is determined that all the decoding-target tiles have been decoded (YES in step S615), the process proceeds to step S616. In the case where it is determined that all the decoding-target tiles have not been decoded (NO in step S615), the process returns to step S613, and reading out of the encoded data of a subsequent tile and decoding processing are performed.

In step S616, the display controller 109 performs control such that the decoded image decoded in step S614 is output to the display 110 at the frame rate determined in step S610. The display 110 displays the decoded image, which has been reconstructed by the tile decoding unit 103. Note that in the case where the size of a decoded image decoded by the tile decoding unit 103 is larger than the size of a display screen capable of being displayed by the display 110, the display 110 reduces and displays the decoded image as necessary.

In step S617, the tile decoding unit 103 determines whether or not all frames corresponding to the temporal layer level selected by the level selection unit 208 of the rate calculation unit 107 have been decoded. In the case where the tile decoding unit 103 determines that all the frames have been decoded, the decoding process performed by the image decoding apparatus 10 ends. In contrast, in the case where the tile decoding unit 103 determines that all the frames corresponding to the temporal layer level selected by the level selection unit 208 have not yet been decoded, the process returns to step S606.

The case has been described above where the rate calculation unit 107 determines in step S606 that a region setting request has not been acquired (NO in step S606) and where the tile determination unit 205 determines in step S611 that a region of interest has not yet been set (NO in step S611). In such a case, the image decoding apparatus 10 decodes the encoded data input thereto as described above, and displays the tiles of one entire frame.

Next, in the case where the tile determination unit 205 determines in step S611 that a region of interest has already been set (YES in step S611), the process proceeds to processing in step S613. For example, in the case where there is no change in terms of region of interest about a decoding-target frame, the tile determination unit 205 determines in step S611 that a region of interest has already been set, and the process proceeds to processing in step S613. Since the processing in and after step S613 is the same as the above-described processing, description thereof will be omitted. Note that the processing in step 613 is performed in accordance with information regarding the number, positions, and sizes of regions of interest that have already been set (region-of-interest information).

Here, the case where the position of a region 502 moves from a certain position in Fig. 5B to a certain position in Fig. 5C will be described using Figs. 5B and 5C. For example, there may be a case where the position and size of the region 502 are changed by the user specifying movement of the region 502, by the detector (not illustrated) performing object detection, or the like. In this case, the region of interest set by the region setting unit 106 is updated in accordance with movement of the region 502, and the region setting unit 106 outputs a region setting request and region-of-interest information to subsequent processing units. Then, the processing units subsequent to the region setting unit 106 perform processes for determining decoding-target tiles, a frame rate, a temporal layer level for which decoding is to be performed, and the like in accordance with the region setting request and the region-of-interest information output by the region setting unit 106, and partial-view display of the changed region of interest is realized.

In this manner, in the case where there is no region setting request, the image decoding apparatus 10 is capable of displaying a moving image in a partial-view display manner or an entire-view display manner in accordance with whether or not a region of interest has already been set, as in the above-described process.

Next, a case will be described where the rate calculation unit 107 determines in step S606 that a region setting request has been acquired from the region setting unit 106 (YES in step S606) and the process proceeds to processing in step S607. The region setting unit 106 sets, as a region of interest, a region specified by the user referring to the moving image displayed on the display 110 in an entire-view display manner in the present embodiment. For example, the display 110 includes a touch panel, the user specifies the position and size of a region of interest by performing an encircling operation using their finger on the touch panel, and a circumscribed rectangular region around the encircled portion may be set as a region of interest. Note that a region-of-interest setting method performed by the region setting unit 106 is not limited to this. For example, the region setting unit 106 may acquire a characteristic region detected by the detector (not illustrated), and set the acquired characteristic region as a region of interest. In addition, the region setting unit 106 may also set one or more regions of interest. In addition, a region-of-interest specification method performed by the user is not limited to the above-described method, either.

Here, a specific example of region of interests will be described using Fig. 5B. In Fig. 5B, regions 501, 502, 503, and 504 represent regions of interest specified by the user. In addition, for each region of interest, the upper left coordinates of the region of interest are treaded as the position of the region of interest, and the size of a circumscribed rectangular region around the region of interest is treated as the size of the region of interest. First, a case will be described where only the region 501 is set as a region of interest in the present embodiment. When the user specifies the region 501, the region setting unit 106 sets the region 501, which has been specified by the user, as a region of interest, and outputs a region setting request and region-of-interest information to the rate calculation unit 107 downstream thereof. Here, the region setting unit 106 inputs, to the rate calculation unit 107, information indicating that the number of regions of interest is one, information regarding the position of the region 501, and information regarding the size of the region 501 as region-of-interest information in the present embodiment.

Next, in step S607, the tile determination unit 205 of the rate calculation unit 107 determines whether or not entire-view display has been requested, in accordance with the region-of-interest information acquired from the region setting unit 106 via the terminal 203. That is, the tile determination unit 205 determines whether or not regions of interest have been set in accordance with the information regarding the number of regions of interest among pieces of information included in the acquired region-of-interest information in the present embodiment. In addition, the tile determination unit 205 determines whether or not entire-view display has been requested in accordance with the information regarding the number of regions of interest in the present embodiment. For example, in the case where the number of regions of interest is greater than or equal to one, the tile determination unit 205 determines that regions of interest have been set. In the case where the number of regions of interest is equal to the number of tiles included in one frame, the tile determination unit 205 determines that entire-view display has been requested.

Then, in the case where it is determined in step S607 that entire-view display has been requested (YES in step S607), the process proceeds to processing in step S612, which has been described above, and thus description thereof will be omitted. In contrast, in the case where it is determined in step S607 that partial-view display has been requested (NO in step S607), the process proceeds to processing in step S608. Here, since the region 501 illustrated in Fig. 5B is set as a region of interest, and the tile determination unit 205 determines that partial-view display has been requested, the process proceeds to processing in step S608.

In step S608, the tile determination unit 205 acquires the region-of-interest information from the region setting unit 106 via the terminal 203, and determines decoding-target tiles in accordance with the acquired region-of-interest information. Then, the tile determination unit 205 outputs, to subsequent processing units, information regarding the determined decoding-target tiles via the counter 206 and the terminal 209. Here, the region 501 illustrated in Fig. 5B, which is a region of interest according to the present embodiment, is included in tiles having tile numbers 11, 12, 21, and 22 among the tiles illustrated in Fig. 5A. That is, the tile numbers corresponding to the region of interest are 11, 12, 21, and 22. Thus, in step S608, the tile determination unit 205 outputs information indicating these tile numbers 11, 12, 21, and 22 to the counter 206 and the terminal 209.

In step S609, the counter 206 counts the number of the decoding-target tiles determined in step S608 by the tile determination unit 205. That is, the counter 206 counts the number of the decoding-target tiles in accordance with the information regarding the decoding-target tiles output from the tile determination unit 205, and outputs count information based on a count result to the rate determination unit 207 in the present embodiment. Here, since the counter 206 acquires information indicating the tile numbers 11, 12, 21, and 22 of the decoding-target tiles from the tile determination unit 205, the number of the decoding-target tiles is four. Then, the counter 206 outputs information indicating that the number of the decoding-target tiles is four to the rate determination unit 207.

In step S610, the rate determination unit 207 determines a frame rate for the region of interest in the case of partial-view display, and outputs the determined frame rate to the level selection unit 208. That is, the rate determination unit 207 determines a frame rate of the moving image, which is a display target, in the case of partial-view display in accordance with the count information output from the counter 206 and indicating the number of the decoding-target tiles, and the performance information input from the terminal 201 in the present embodiment. Here, the number of the decoding-target tiles counted in step S609 by the counter 206 is four, and the performance information acquired in step S605 by the performance acquiring unit 105 indicates that the image decoding apparatus 10 is capable of decoding 72 tiles/s. The rate determination unit 207 determines the frame rate for the region of interest to be 72/4 = 18 frames/s in the case of partial-view display in accordance with these pieces of information.

Furthermore, in step S610, the level selection unit 208 selects a temporal layer level for a decoded image in accordance with the frame rate determined by the rate determination unit 207 and the frame rates of the respective temporal layer levels acquired by the level acquiring unit 204. Then, the level selection unit 208 outputs, to subsequent processing units, information regarding the temporal layer level selected for the decoded image via the terminal 209. Note that the selection process for a temporal layer level for a decoded image is substantially the same as that of step S612 described above, and thus description thereof will be omitted. Here, the frame rate of the moving image, which is a display target, determined by the rate determination unit 207 is 18 frames/s. The frame rates of the respective temporal layer levels are 12 frames/s for up to the temporal layer level 2, 6 frames/s for up to the temporal layer level 1, and 1 frame/s for the temporal layer level 0. That is, the highest frame rate that is lower than or equal to 18 frames/s (the frame rate of the moving image, a display target) is 12 frames/s obtained for up to the temporal layer level 2. As a result, the level selection unit 208 selects 12 frames/s as the frame rate for the decoded image, and selects all the temporal layer levels 0, 1, and 2 as decoding-target temporal layer levels.

In the following, the process proceeds to processing in step S613 after the processing in step S612. The processing in and after step S613 is substantially the same as that performed in the case where entire-view display is performed on a moving image, and thus description thereof will be omitted. Only specific examples will be described.

In step 613, the temporal layer levels selected by the level selection unit 208 are all of 0, 1, and 2, and the decoding-target tiles determined by the tile determination unit 205 are the tiles having the tile numbers 11, 12, 21, and 22. As a result, the buffer 102 reads out encoded data of the tiles having the tile numbers 11, 12, 21, and 22, and outputs the encoded data to the tile decoding unit 103.

In step S614, the tile decoding unit 103 decodes the encoded data of the tiles having the tile numbers 11, 12, 21, and 22 input from the buffer 102, and reconstructs a decoded image in accordance with the information regarding the decoding-target tiles output from the tile determination unit 205.

In step S615, the tile decoding unit 103 determines whether or not all the tiles having the tile numbers 11, 12, 21, and 22, which are the decoding-target tiles, have been decoded. In the case where it is determined that all the tiles have been decoded, the process proceeds to step S616. Otherwise, the process returns to step S613, and reading out of the encoded data of a subsequent tile and decoding processing are performed. Then, in the case where decoding processing is completed for all the decoding-target tiles (YES in step S615), and decoding processing is completed for all the frames for the selected temporal layer levels (YES in step S617), the decoding process performed by the image decoding apparatus 10 for partial-view display ends.

In this manner, in the case where there is a region setting request, the image decoding apparatus 10 is capable of displaying a moving image in a partial-view display manner or an entire-view display manner in accordance with whether or not entire-view display is requested, as in the above-described process. Next, processing performed in a case where a region of interest is set, a moving image is displayed in a partial-view display manner, and thereafter display of the moving image is changed from partial-view display to entire-view display will be described. For example, a process for changing partial-view display to entire-view display is capable of being started by the user canceling a region of interest and commanding entire-view display on the touch panel of the display 110. Note that a commanding method for changing partial-view display to entire-view display is not limited. That is, the image decoding apparatus 10 may also be controlled so that display is changed from partial-view display to entire-view display, by the user selecting an icon displayed for performing switching to entire-view display on the screen of the display 110 and issuing a command. In addition, the image decoding apparatus 10 may also be controlled so that display is changed from partial-view display to entire-view display, by the user commanding enlargement of a display area of the moving image on the screen of the display 110.

In a case where changing of a display mode from partial-view display to entire-view display has been commanded, the region setting unit 106 outputs a region setting request and region-of-interest information to a subsequent processing unit. Note that region-of-interest information includes at least one of information regarding the number of regions of interest, information regarding the positions of regions of interest, and information regarding the sizes of regions of interest. In the case where the display mode has been changed from partial-view display to entire-view display, the region setting unit 106 outputs, as the region-of-interest information, information indicating that the number of regions of interest is zero to the subsequent processing unit in the present embodiment.

Then, the rate calculation unit 107 determines in step S606 that a region setting request has been acquired (YES in step S606), and thus the process proceeds to processing in step S607. In step S607, the tile determination unit 205 of the rate calculation unit 107 determines whether or not entire-view display has been requested by the region setting request. Here, since the number of regions of interest is zero, the tile determination unit 205 determines that entire-view display has been requested (YES in step S607), and the process proceeds to processing in step S612. In step S612, the tile determination unit 205 determines tiles of one entire frame (picture) (48 tiles having tile numbers 00 to 57) to be decoding-target tiles. Since the processing in and after step S612 is substantially the same as the above-described processing performed in the case of entire-view display, description thereof will be omitted.

In this manner, in the case where the display mode has been changed from partial-view display to entire-view display, the image decoding apparatus 10 is capable of realizing entire-view display by performing the above-described process.

With the above-described configuration and operations, the image decoding apparatus 10 becomes capable of decoding, at an appropriate frame rate, a moving image on which temporal scalable coding has been performed in the present embodiment.

In addition, the image decoding apparatus 10 is capable of appropriately determining either entire-view display, by which an entire frame is displayed, or partial-view display, by which a region of interest is displayed, in accordance with the processing performance of the image decoding apparatus 10 in the present embodiment.

Note that, only the region 501 has been described as a region of interest in the example of partial-view display of the present embodiment; however, substantially the same processing will be performed even in a case where a plurality of regions are selected as regions of interest. For example, in Fig. 5B, in the case where the region 501 and the region 502 have been selected as regions of interest, information regarding the number of regions of interest included in region-of-interest information indicates that the number of regions of interest is two. Note that the region-of-interest information may include information regarding the positions and sizes of the region 501 and the region 502. Then, the region setting unit 106 outputs the region-of-interest information to the tile determination unit 205 of the rate calculation unit 107 via the terminal 203. The tile determination unit 205 determines tiles corresponding to the region 501 (the tiles having the tile numbers 11, 12, 21, and 22) and tiles corresponding to the region 502 (tiles having tile numbers 14, 15, 16, 24, 25, and 26) to be decoding-target tiles. The counter 206 counts the number of the decoding-target tiles determined by the tile determination unit 205, and outputs information regarding a count result (the number of tiles is 10) to the rate determination unit 207, which is downstream of the counter 206. Furthermore, the rate determination unit 207 determines a frame rate to be 72/10 = 7.2 frames/s, and the level selection unit 208 selects temporal layer levels 0 and 1 having a frame rate of 6 frames/s and a frame rate of 1 frame/s as temporal layer levels for a decoded image.

In addition, in the case where the region 501, the region 502, a region 503, and a region 504 in Fig. 5B have been set as regions of interest, information regarding the number of regions of interest included in region-of-interest information indicates that the number of regions of interest is four. Note that the region-of-interest information may include information regarding the positions and sizes of the region 501, the region 502, the region 503, and the region 504. Then, the region setting unit 106 outputs the region-of-interest information to the tile determination unit 205 of the rate calculation unit 107 via the terminal 203. The tile determination unit 205 determines tiles having tile numbers 11, 12, 21, 22, 14, 15, 16, 24, 25, 26, 32, 42, 34, 35, 36, 37, 44, 45, 46, 47, 54, 55, 56, and 57 to be decoding-target tiles. That is, a count result obtained by the counter 206 (the number of the decoding-target tiles) is 21. Furthermore, a determination result obtained by the rate determination unit 207 (a frame rate) is 72/21 = 3.41 frames/s. The level selection unit 208 compares the frame rate determined by the rate determination unit 207 (3.41 frames/s) with frame rates corresponding to the respective temporal layer levels. Then, the level selection unit 208 determines a temporal layer level satisfying the conditions of having the highest frame rate that is lower than or equal to the determined frame rate to be a temporal layer level for a decoded image. Here, since the frame rate is 12 frames/s for up to the temporal layer level 2, 6 frames/s for up to the temporal layer level 1, and 1 frame/s for the temporal layer level 0, the highest frame rate that is lower than or equal to the determined frame rate is 1 frame/s obtained for the temporal layer level 0. That is, a selection result obtained by the level selection unit 208 (temporal layer levels for a decoded image) is only the temporal layer level 0.

Note that it has been described that all the tiles are treated as independent decoding tiles in the present embodiment; however tiles are not limited to independent decoding tiles. Independent decoding tiles may be decoded at a high frame rate, and combined with the other tiles. For example, a case will be described, as an example, where only the region 504 has been selected as a region of interest and where independent decoding tiles are only tiles having tile numbers 36, 46, and 56. Here, the tiles other than the independent decoding tiles (tiles having tile numbers 34, 35, 44, 45, 54, and 55) refer to a region other than tiles corresponding to decoding-target tiles in frames at other times, and thus the entire frame needs to be decoded. Thus, the tiles of at least the temporal layer level 0 need to be decoded. That is, since the frame rate obtained for the temporal layer level 0 is 1 frame/s, decoding processing needs to be performed at 48 tiles/s for the tiles other than the independent decoding tiles. Since the processing performance of the tile decoding unit 103 of the image decoding apparatus 10 is 72 tiles/s, a processing performance of 72 - 48 = 24 tiles/s is available. Since the independent decoding tiles are three tiles having the tile numbers 36, 46, and 56, decoding is possible at 24 ÷ 3 = 8 frames/s for these independent decoding tiles with a processing performance of 24 tiles/s. The image decoding apparatus 10 combines a decoded image of the tiles other than the independent decoding tiles decoded at 1 frame/s and a decoded image of the independent decoding tiles decoded at 8 frames/s, and displays the resulting image on the display 110. That is, in a moving image regarding the region of interest displayed on the display 110, playback is performed at 8 frames/s only for an image located at a position corresponding to the independent decoding tiles (the tile numbers 36, 46, and 56), and playback is performed at 1 frame/s for the other image in the region 504, which is the region of interest.

Note that it has been described in the present embodiment that the tiles within a frame are the same in size, and information regarding the size of each tile has been shared in advance by the decoding side and an encoding side, which is not illustrated; however, the size of each tile is not limited to this. That is, all the tiles within a frame do not have to be the same in size. For example, after acquisition of processing performance by treating, as a standard tile size, the size of tiles that should be shared, the number of tiles capable of being processed may be changed by comparing an actual size of tiles decoded by the header decoding unit 104 with the standard tile size. Fig. 4B illustrates the relationship between the number of tiles and frame rate in the case where the size of tiles has become larger than that of Fig. 4A. Likewise, also in the case where tiles are not the same in size within a frame, the average size is calculated as a standard size, and processing performance considered to be necessary for decoding is calculated regarding tiles having sizes other than the standard size in accordance with a size ratio.

Note that it has been described that no decoded image is displayed, and a region of interest has not yet been set at the time when decoding of encoded data of tiles starts; however, what is displayed and when to set a region of interest at the time when decoding of encoded data of tiles starts are not limited to this. In the case where a fixed camera is used and the angle of view of the fixed camera is not changed, specification of a region of interest may be performed before decoding by displaying images of a sequence decoded before a decoding-target sequence, a simple illustration representing an image-capturing target region (screen) of the fixed camera, or the like.

Note that, the tile determination unit 205 determines in step S606 of Fig. 6A whether or not a region of interest has been set in accordance with a region setting request; however, how to determine whether or not a region of interest has been set is not limited to this. For example, in the case where the position of a region of interest is the origin of a frame (picture) (the position of the upper left corner), and the size of the region of interest is equal to the size of the picture in accordance with region-of-interest information, the tile determination unit 205 may, of course, determine that a region of interest has not been set. In addition, also regarding update of a region of interest, in the case where there is no region setting request, the tile determination unit 205 compares region-of-interest information regarding a previous frame with region-of-interest information regarding a decoding-target frame. The tile determination unit 205 may, of course, determine that there is a region setting request in a case where there is a change between the pieces of region-of-interest information.

Note that it has been described in the present embodiment that frame time intervals are 1/12 seconds, and the number of temporal layer levels is three. In addition, regarding the frame rates of the respective temporal layer levels, it has been described that the frame rate is 12 frames/s for up to the temporal layer level 2 (the temporal layer levels 0, 1, and 2), 6 frames/s for up to the temporal layer level 1 (the temporal layer levels 0 and 1), and 1 frame/s for the temporal layer level 0. However, the frame time intervals, the frame rates of the respective temporal layer levels, and the number of temporal layer levels are not limited to those described above.

Note that the display controller 109 may perform control such that information regarding the positions of independent decoding tiles within a frame, information regarding the sizes of the independent decoding tiles, or both are displayed on the display 110, in accordance with the information regarding the independent decoding tiles, which have been obtained by decoding TMCTS_SEI included in the header data. As a result, the user is able to easily set a region of interest in accordance with the information regarding the positions of the independent decoding tiles displayed on the display 110, information regarding the sizes of the independent decoding tiles, or both.

### Second Embodiment

In the present embodiment, an image decoding apparatus 10 will be described, which is capable of setting, in accordance with a frame rate specified by the user, a frame rate used when decoding-playback (display) is performed. In the following, the image decoding apparatus 10 according to the present embodiment will be described using the drawings. First, the configuration of the image decoding apparatus 10 according to the present embodiment will be described using Fig. 7. Fig. 7 is a block diagram illustrating the configuration of the image decoding apparatus 10 according to the present embodiment. In Fig. 7, processing units having the same functions as those of the image decoding apparatus 10 illustrated in Fig. 1 of the first embodiment are denoted by the same reference numerals, and description thereof will be omitted.

A rate acquiring unit 701 acquires information regarding a frame rate specified by the user. For example, the display 110 is provided with a touch panel, and the user is able to specify, using the touch panel, a desired frame rate (a predetermined frame rate) to be used in a case where a moving image is decoded and played back. The rate acquiring unit 701 is capable of acquiring the frame rate specified by the user through the touch panel.

Note that as a method for specifying a frame rate using a touch panel, various methods may be used. For example, the user may command to increase the frame rate of a moving image that has already been displayed by tapping the touch panel using their finger a plurality of times within a predetermined time period. In addition, the user may also command to decrease the frame rate by tapping the touch panel apparatus a plurality of times within a certain time period shorter than the above-described predetermined time period. In addition, the user may also issue a command so that the greater number of times the user taps the touch panel within a specific time period, the higher the frame rate becomes. In addition, an icon that makes it possible to increase or decrease the frame rate is displayed on the display screen of the display 110, and the user may also issue a command by, for example, touching the icon. In addition, the user may input information regarding a value of a desired frame rate to a rate input unit (not illustrated) with which the display 110 or the like is provided, and the rate acquiring unit 701 may acquire the information regarding the value of the certain frame input to the rate input unit (not illustrated). Note that the above-described touch panel and the rate input unit (not illustrated) are not limited to those provided in the display 110, and may also be provided as other processing units inside the image decoding apparatus 10, or outside the image decoding apparatus 10.

A rate calculation unit 707 differs from the rate calculation unit 107 illustrated in Fig. 1 of the first embodiment in that the frame rate of a moving image to be displayed is calculated using a frame rate acquired by the rate acquiring unit 701. In addition, a decoding tile determination unit 708 differs from the decoding tile determination unit 108 illustrated in Fig. 1 of the first embodiment in that an entirety decoding level is input from the rate calculation unit 707. Note that details of the entirety decoding level will be described later.

In addition, the tile decoding unit 103 of the image decoding apparatus 10 has processing performance with which it is possible to decode 360 tiles per second in the present embodiment. In addition, tile division of encoded data input to the input unit 101 of the image decoding apparatus 10 is substantially the same as that of the first embodiment, and a scene of tile division of one frame is illustrated in Fig. 5A.

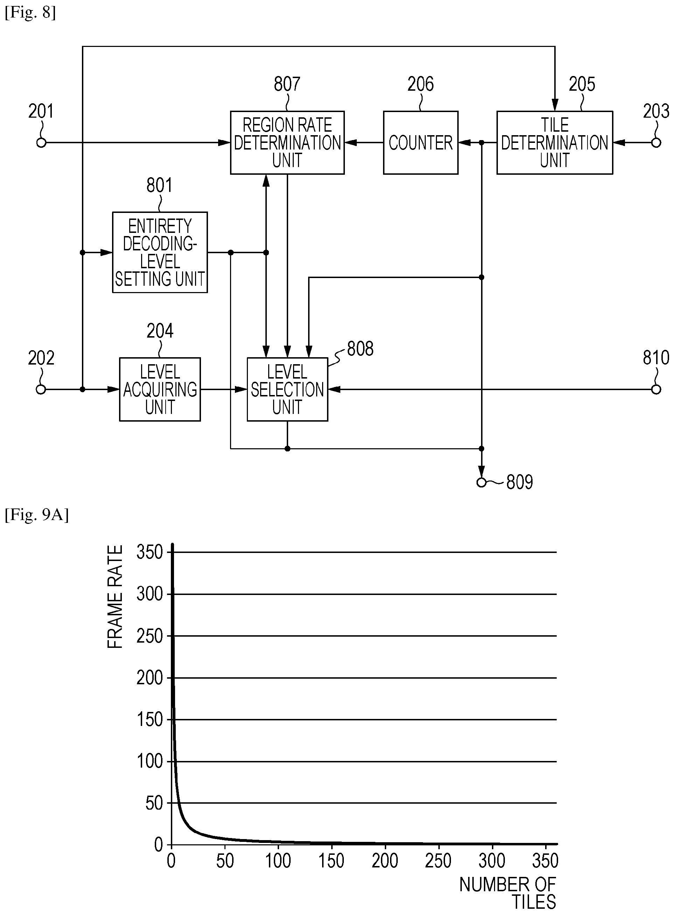

Next, the configuration of the rate calculation unit 707 will be described in detail using Fig. 8. In Fig. 8, processing units having the same functions as the processing units of the rate calculation unit 107 illustrated in Fig. 2 of the first embodiment are denoted by the same reference numerals, and description thereof will be omitted.

An entirety decoding-level setting unit 801 calculates an entirety decoding level, which is a temporal layer level at which one entire frame is capable of being decoded. A desired frame rate input by the user is input to a terminal 810 from the rate acquiring unit 701 of Fig. 7. A region rate determination unit 807 differs from the rate determination unit 207 illustrated in Fig. 2 of the first embodiment in that the frame rate for a region of interest is determined in accordance with an entirety decoding level set by the entirety decoding-level setting unit 801. A level selection unit 808 differs from the level selection unit 208 illustrated in Fig. 2 of the first embodiment in that a desired frame rate input by the user is input thereto from the rate acquiring unit 701 via the terminal 810. A terminal 809 differs from the terminal 209 illustrated in Fig. 2 of the first embodiment in that an entirety decoding level set by the entirety decoding-level setting unit 801 is output therefrom.

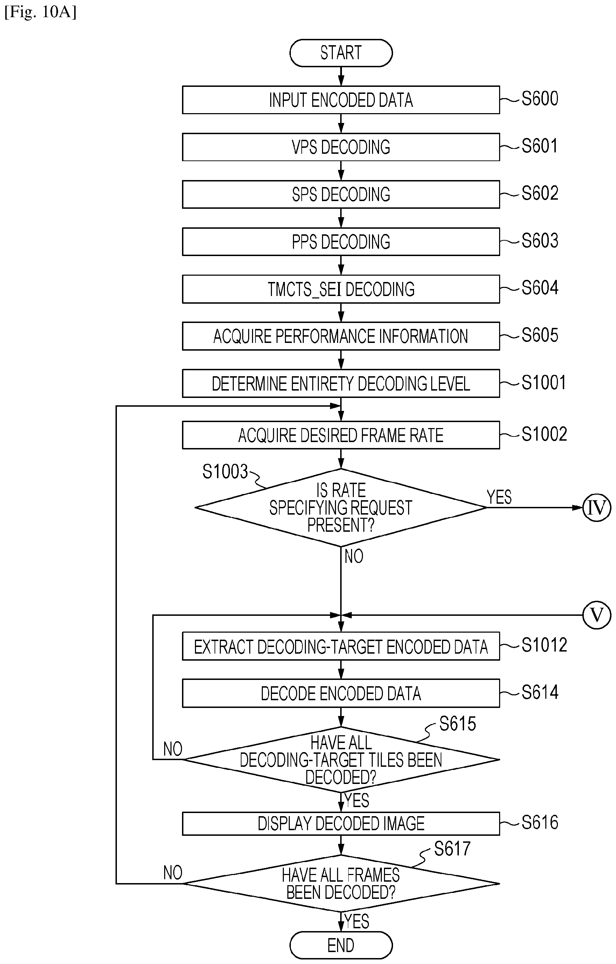

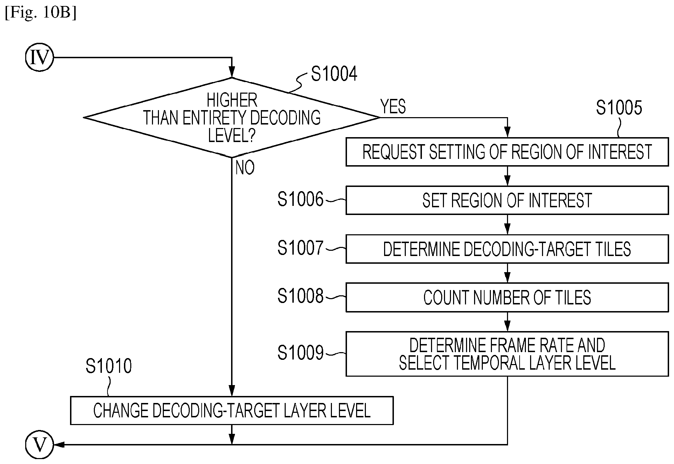

Next, a decoding processing operation of the image decoding apparatus 10 in the present embodiment will be described using Figs. 10A and 10B. Figs. 10A and 10B are a flowchart illustrating the decoding processing operation of the image decoding apparatus 10 according to the present embodiment. In Figs. 10A and 10B, steps having the same functions as those of the flowchart illustrated in Figs. 6A and 6B of the first embodiment will be denoted by the same reference numerals, and description thereof will be omitted.

In addition, encoded data input to the input unit 101 is the encoded data illustrated in Fig. 3 similarly to as in the first embodiment, and the number of temporal layer levels of the encoded data is three in the present embodiment. In addition, the present embodiment is the same as the first embodiment in that the frame rate is 12 frames/s in the case where decoding is performed up to the temporal layer level 2, and the frame rate is 6 frames/s in the case where decoding is performed up to the temporal layer level 1. In contrast, the present embodiment differs from the first embodiment in that the frame rate is 3 frames/s in the case where decoding is performed only for the temporal layer level 0. Note that although these pieces of information, information regarding the number of temporal layer levels of encoded data and information regarding frame rates of respective temporal layer levels, may be calculated from a decoding result of header data, these pieces of information may also be, of course, described using SEI handling data input by the user. In addition, the processing performance of the tile decoding unit 103 is 360 tiles/s in the present embodiment, and this differs from that of the first embodiment.

In step S1001, the entirety decoding-level setting unit 801 of the rate calculation unit 707 calculates a temporal layer level (referred to as an entirety decoding level) at which one entire frame is capable of being decoded, in accordance with information input from the header decoding unit 104 via the terminal 202. Here, the entirety decoding-level setting unit 801 calculates an entirety decoding level in accordance with information regarding temporal layers (information regarding frame rates of the respective temporal layer levels), information regarding tiles (information regarding the number of tiles within a frame), and performance information. One frame is constituted by 48 tiles as illustrated in Fig. 5A in the present embodiment. Since the processing performance of the tile decoding unit 103 is 360 tiles/s, a frame rate is 360/48 = 7.5 frames/s in the case where the entire frame is decoded. The frame rates of the respective temporal layer levels are 12 frames/s (the temporal layer levels 0, 1, and 2), 6 frames/s (the temporal layer level 0 and 1), and 3 frames/s (the temporal layer level 0), and thus decoding is incapable of being performed up to the temporal layer level 2. Thus, the entirety decoding-level setting unit 801 sets the temporal layer level 1, at which the frame rate is 6 frames/s, as the entirety decoding level. Then, in step S1001, the entirety decoding-level setting unit 801 outputs the set entirety decoding level to subsequent processing units such as the level selection unit 808 and the terminal 809.

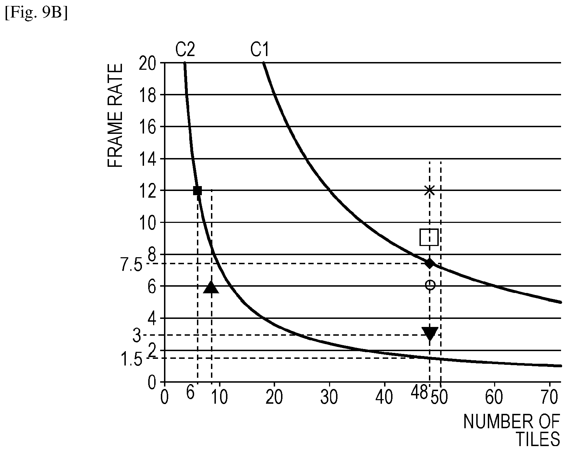

Here, an entirety-decoding-level setting process performed by the entirety decoding-level setting unit 801 will be illustrated in detail in Figs. 9A and 9B. Fig. 9A is a diagram illustrating the entire relationship between the number of decoding-target tiles and frame rate in accordance with the processing performance of the tile decoding unit 103. Fig. 9B is a diagram illustrating a portion near the origin cut out from Fig. 9A, and a curve C1 on the right side of Fig. 9B is a portion of Fig. 9A. Since the number of tiles of one frame is 48, it is clear from Fig. 9B that a frame rate at which the tile decoding unit 103 is capable of performing decoding is 7.5 frames/s. In addition, the tile decoding unit 103 is capable of performing decoding at frame rates shown by coordinates (region) positioned under the curve C1 on the right side of Fig. 9B in the present embodiment. In contrast, decoding is incapable of being performed at frame rates shown by coordinates positioned above the curve C1 because of the processing performance of the tile decoding unit 103.

For example, in the case where decoding is performed up to the temporal layer level 1, the frame rate is 6 frames/s, and has coordinates represented by ○ in Fig. 9B. In addition, in the case where decoding is performed for the temporal layer level 0, the frame rate is 3 frames/s, and has coordinates represented by Δ. These ○ and Δ representing the frame rates for up to the temporal layer level 1 and for the temporal layer level 0 are both positioned under the curve C1, and thus it is clear that decoding is capable of being performed at the frame rates. In contrast, in the case where decoding is performed up to the temporal layer level 2, the frame rate is 12 frames/s, and has coordinates represented by x. This × representing the frame rate for up to the temporal layer level 2 is positioned above the curve C1, and thus it is clear that decoding is incapable of being performed at this frame rate.

Next, in step S1002, the rate acquiring unit 701 acquires information regarding a desired frame rate specified by the user. In addition, in the case where a desired frame rate has been specified by the user, the rate acquiring unit 701 outputs a rate specifying request and information regarding the desired frame rate to a subsequent processing unit. Note that in the case where a desired frame rate has not been specified by the user in the present embodiment, the image decoding apparatus 10 performs decoding and display at the frame rate obtained for the temporal layer level 0. For the sake of description, a description will be made assuming that a desired frame rate is not set at the beginning (before a decoding process starts).

In step S1003, the rate calculation unit 707 determines whether or not a rate specifying request has been acquired from the rate acquiring unit 701. In the case where a rate specifying request has not been acquired (NO in step S1003), the rate calculation unit 707 determines that a frame rate has not been set by the rate acquiring unit 701, and the process proceeds to processing in step S1012. In contrast, in the case where a rate specifying request has been acquired (YES in step S1003), the rate calculation unit 707 determines that a frame rate has been set by the rate acquiring unit 701, and the process proceeds to processing in step S1004.

First, a case will be described where the rate calculation unit 707 determines in step S1003 that a rate specifying request has not been acquired from the rate acquiring unit 701 (NO in step S1003). In this case, in step S1012, the decoding tile determination unit 708 performs the following processing. That is, in step S1012, the decoding tile determination unit 708 compares the entirety decoding level set in step S1001 by the entirety decoding-level setting unit 801 of the rate calculation unit 707 with a decoding-target temporal layer level calculated by the decoding tile determination unit 708. Then, in the case where the entirety decoding level is higher than the decoding-target temporal layer level, the decoding tile determination unit 708 selects, as decoding-target tiles, all the tiles of temporal layer levels up to the decoding-target temporal layer level. Furthermore, the decoding tile determination unit 708 reads out encoded data of the selected decoding-target tiles from the buffer 102, and outputs the read-out encoded data to the tile decoding unit 103. Here, since the entirety decoding level is the temporal layer level 1, and the decoding-target temporal layer level is 0, the entirety decoding level is higher than the decoding-target temporal layer level. Thus, the decoding tile determination unit 708 selects all the tiles of the decoding-target temporal layer level 0 as decoding-target tiles.

Then, after the processing in step 1012, the process proceeds to processing in step S614 in the present embodiment. Here, the image decoding apparatus 10 performs decoding and display on the encoded data of all the tiles of the decoding-target temporal layer level 0 in processing in and after step S614. Note that the processing in and after step S614 is substantially the same as the processing described using Fig. 6A of the first embodiment, and thus description thereof will be omitted.

Next, regarding the case where the rate calculation unit 707 determines in step S1003 that a rate specifying request has been acquired from the rate acquiring unit 701 (YES in step S1003), processing in and after S1004 will be described.

First, a case will be described where the rate acquiring unit 701 has been commanded to increase the frame rate by the user. As described above, the frame rate before specification of a frame rate and at the time when the decoding process starts is the frame rate obtained for the temporal layer level 0 (3 frames/s). Here, suppose that the image decoding apparatus 10 has been commanded to increase the frame rate from 3 frames/s to 6 frames/s.

First, in step S1004, the level selection unit 808 determines whether or not the temporal layer level based on the desired frame rate is greater (larger, higher) than the entirety decoding level. That is, the level selection unit 808 determines whether or not decoding of frames of a temporal layer level higher than the entirety decoding level set by the entirety decoding-level setting unit 801 is necessary, in accordance with the desired frame rate input from the rate acquiring unit 701 via the terminal 810. Here, in the case where the desired frame rate is lower than or equal to a frame rate corresponding to the entirety decoding level, the level selection unit 808 determines in the present embodiment that decoding of a temporal layer level higher than the entirety decoding level is unnecessary. Then, in the case where the level selection unit 808 has determined that decoding of a temporal layer level higher than the entirety decoding level is necessary (YES in step S1004), the process proceeds to processing in step S1005. In contrast, in the case where the desired frame rate is higher than the frame rate corresponding to the entirety decoding level, the level selection unit 808 determines that decoding of a temporal layer level higher than the entirety decoding level is necessary. Then, in the case where it is determined that decoding of a temporal layer level higher than the entirety decoding level is unnecessary (NO in step S1004), the process proceeds to processing in step S1010. Here, the desired frame rate (6 frames/s) is lower than or equal to a frame rate achieved by decoding of the entirety decoding level (7.5 frames/s), and thus the process proceeds to processing in step S1010.

Since the temporal layer level corresponding to the desired frame rate is lower than or equal to the entirety decoding level, the level selection unit 808 changes in step S1010 the decoding-target temporal layer level to the temporal layer level corresponding to the desired frame rate. That is, the decoding-target temporal layer level is changed from the temporal layer level 0 used in the case where that desired frame rate is not set to the temporal layer level 1 corresponding to the desired frame rate. Then, in the processing in and after step S1012, the image decoding apparatus 10 performs decoding and display on encoded data of all the tiles up to the changed decoding-target temporal layer level 1 (the temporal layer levels 0 and 1).

Next, a case will be described where the rate acquiring unit 701 has been commanded to further increase the frame rate by the user. Here, suppose that the image decoding apparatus 10 has been commanded by the user to increase the frame rate from 6 frames/s to 9 frames/s. In this case, 9 frames/s, which is a desired frame rate, has coordinates represented by □ of Fig. 9B. Since □ is positioned above the curve C1 on the right side, the image decoding apparatus 10 is incapable of increasing the frame rate for one entire frame to the desired frame rate with the processing performance of the tile decoding unit 103.

In such a case, the level selection unit 808 determines in step S1004 that the desired frame rate acquired by the rate acquiring unit 701 is lower than or equal to a frame rate corresponding to the entirety decoding level set by the entirety decoding-level setting unit 801. That is, the level selection unit 808 determines in step S1004 that decoding of a temporal layer level higher than the entirety decoding level is necessary (YES in step S1004). Then, the image decoding apparatus 10 performs processing in and after step S1005 to perform the decoding process in accordance with a frame rate determined by the region rate determination unit 807 for a region of interest in the present embodiment.

In step S1005, the display controller 109 outputs, to the display 110, information indicating that it is not possible to increase the frame rate for the entire frame, and sends a notification to request the user to set a region of interest. That is, the user is able to acquire the above-described information output on the display 110, and recognize that a region of interest needs to be specified.

In step S1006, the region setting unit 106 sets a region specified by the user as a region of interest. Then, the region setting unit 106 outputs region-of-interest information regarding the set region of interest to the tile determination unit 205 of the rate calculation unit 707 via the terminal 203.

In step S1007, similarly to as in step S608 of the first embodiment, the tile determination unit 205 determines decoding-target tiles necessary for a decoded image of the region of interest in accordance with the acquired region-of-interest information. Then, the tile determination unit 205 outputs information regarding the determined decoding-target tiles to the counter 206 and the terminal 809.

In step S1008, similarly to as in step S609 of the first embodiment, the counter 206 counts the number of the decoding-target tiles in accordance with the information regarding the decoding-target tiles determined by the tile determination unit 205. Then, the counter 206 outputs information regarding the number of tiles, which is a count result, to the region rate determination unit 807.

In step S1009, the region rate determination unit 807 determines a frame rate for the region of interest. The region rate determination unit 807 determines a frame rate for tiles corresponding to the region of interest in accordance with the processing performance of the tile decoding unit 103 acquired from the performance acquiring unit 105 via the terminal 201 and processing performance necessary to decode a frame corresponding to the entirety decoding level. In addition, in step S1009, the level selection unit 808 selects a temporal layer level for the region of interest in accordance with the frame rate determined for the region of interest by the region rate determination unit 807. Then, after the processing in step S1009, the process proceeds to processing in step S1012.

Specifically, the region rate determination unit 807 decodes the tiles corresponding to the region of interest with processing performance obtained by subtracting the processing performance necessary to decode a frame corresponding to the entirety decoding level from the processing performance of the tile decoding unit 103 in the present embodiment. Here, a determination process for a frame rate for a region of interest performed by the region rate determination unit 807 will be described in detail using Fig. 9B. A curve C2 on the left side of Fig. 9B represents processing performance obtained by subtracting the processing performance necessary to decode a frame corresponding to the entirety decoding level from the processing performance of the tile decoding unit 103 in the present embodiment. The processing performance of the tile decoding unit 103 is 360 tiles/s, and the processing performance necessary to decode a frame corresponding to the entirety decoding level is 288 tiles/s in the present embodiment. Thus, the processing performance that may be used for decoding tiles of the region of interest is 72 tiles/s. Here, suppose that the region 502 of Fig. 5B has been selected as the region of interest. Tiles necessary to decode the region 502 are tiles having tile numbers 14, 15, 16, 24, 25, and 26, and the number of tiles of the region of interest is six. In the case where the number of tiles is six, the position that crosses the curve C2 on the left side is 12 frames/s, and does not exceed the curve C1 on the right side. Thus, in step S1009, the region rate determination unit 807 selects 12 frames/s as the frame rate for the region of interest. Since the temporal layer level corresponding to the frame rate for the region of interest is 2, the level selection unit 808 decodes the temporal layer levels 0, 1, and 2 for the tiles of the region of interest, and decodes the temporal layer levels 0 and 1 for the tiles of the other region.

In step S1012, the decoding tile determination unit 708 compares the entirety decoding level set in step S1001 by the entirety decoding-level setting unit 801 with the temporal layer level to be decoded, the temporal layer level having been calculated in step S1009 by the level selection unit 808. Here, the temporal layer level to be decoded for the region of interest (the temporal layer level 2) is higher than the entirety decoding level (the temporal layer level 1). That is, the decoding tile determination unit 708 reads out encoded data of necessary tiles from the buffer 102 so that the tiles of the region of interest are decoded at the calculated temporal layer level (the temporal layer level 2), and the tiles of the other region are decoded at the entirety decoding level (the temporal layer level 1). Here, the decoding tile determination unit 708 selects tiles of the region of interest (the tiles having the tile numbers 14, 15, 16, 24, 25, and 26) up to the temporal layer level 2, and tiles of the other region up to the temporal layer level 1.

After the processing in step S1012, the process proceeds to processing in step S614. In and after the processing in step S614, the image decoding apparatus 10 performs decoding and display on the encoded data of the tiles read out in step S1012 in the present embodiment. Here, the image decoding apparatus 10 decodes the region of interest up to the calculated temporal layer level (the temporal layer levels 0, 1, and 2) at 12 frames/s, and performs control such that the display 110 performs display at 9 frames/s, which is the desired frame rate. Note that, after performing decoding at 12 frames/s, the image decoding apparatus 10 performs downsampling and performs control such that the display 110 performs display at 9 frames/s in the present embodiment. In addition, the image decoding apparatus 10 decodes the region other than the region of interest up to the entirety decoding level (the temporal layer levels 0 and 1), and performs control such that the display 110 performs display at the frame rate (6 frames/s) corresponding to the entirety decoding level. Note that in the case where the image decoding apparatus 10 is capable of decoding the region of interest at a frame rate higher than the desired frame rate, the image decoding apparatus 10 may perform display on the display 110 at the frame rate used in decoding. That is, in the case where the region of interest has been decoded up to the temporal layer level 2 and the desired frame rate is 9 frames/s, control may be performed such that the display 110 performs display at a frame rate corresponding to the temporal layer level 2 higher than the desired frame rate.

In addition, even in the case where the rate acquiring unit 701 has been commanded by the user to reduce the frame rate, the image decoding apparatus 10 performs processing substantially the same as that performed in the case where increasing of the frame rate is commanded. That is, the rate calculation unit 707 determines in step S1003 that the rate acquiring unit 701 has acquired a rate specifying request, and the process proceeds to processing in step S1004. In step S1004, the level selection unit 808 determines whether or not the temporal layer level based on the desired frame rate acquired by the rate acquiring unit 701 is higher than the entirety decoding level. Here, even in the case where reduction of the frame rate is commanded, when the temporal layer level corresponding to the desired frame rate is higher than the entirety decoding level, the process proceeds to step S1005 and the processing in and after step S1005 is performed likewise as described above. In contrast, when the temporal layer level corresponding to the desired frame rate is lower than or equal to the entirety decoding level, the process proceeds to step S1010. The image decoding apparatus 10 changes the decoding-target temporal layer level to the temporal layer level at which the desired frame rate is realized, and performs the processing in and after step S1010. Note that, in step S1010, when the temporal layer level corresponding to the desired frame rate is lower than or equal to the entirety decoding level, the image decoding apparatus 10 may set the decoding-target temporal layer level as the entirety decoding level.

With the above-described configuration and operations, the image decoding apparatus 10 becomes capable of decoding, at an appropriate frame rate, a moving image on which temporal scalable coding has been performed in the present embodiment.

In addition, the image decoding apparatus 10 is capable of appropriately determining either entire-view display, by which an entire frame is displayed, or partial-view display, by which a region of interest is displayed, in accordance with the processing performance of the image decoding apparatus 10 in the present embodiment.

In addition, the image decoding apparatus 10 is capable of playing back the entirety of frames at a frame rate as high as possible within a range that does not exceed the processing performance of the image decoding apparatus 10 by setting the entirety decoding level, and playing back only the region of interest at a further higher frame rate in the present embodiment. That is, the image decoding apparatus 10 is capable of playing back an entire moving image at an appropriate (desired) frame rate, and playing back a region of interest at the highest frame rate within the range that does not exceed the processing performance of the image decoding apparatus 10.

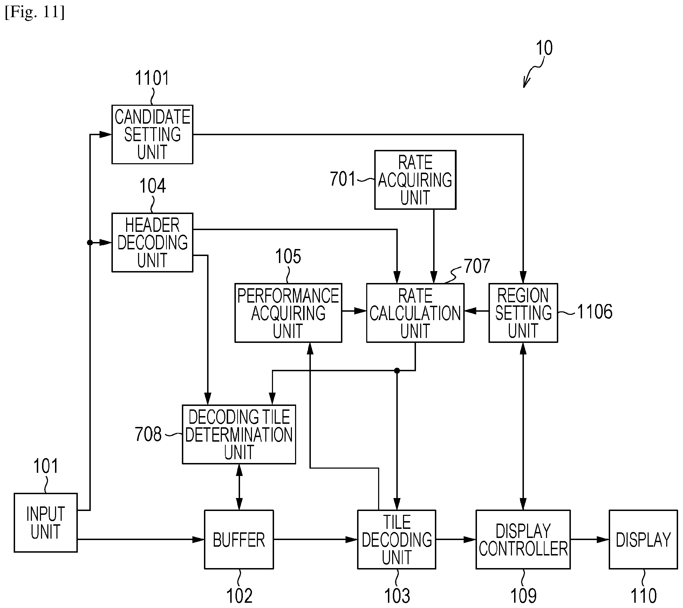

Note that when the image decoding apparatus 10 sends a notification to request setting of a region of interest, the image decoding apparatus 10 may also send a notification of (or display) information regarding candidates of a region of interest. Fig. 11 illustrates a block diagram of an image decoding apparatus 10 that realizes notification of information regarding candidates of a region of interest. In Fig. 11, processing units having the same functions as those of the image decoding apparatus 10 illustrated in Fig. 7 are denoted by the same reference numerals, and description thereof will be omitted. A candidate setting unit 1101 acquires information regarding independent decoding tiles by decoding TMCTS_SEI included in header data, and inputs information regarding the positions and sizes of the independent decoding tiles within a frame, as information regarding candidates of a region of interest, to a region setting unit 1106. The region setting unit 1106 outputs, to the display controller 109, the information regarding candidates of a region of interest output from the candidate setting unit 1101, and the display controller 109 displays the information regarding candidates of a region of interest on the display 110.

As a result, the user is able to easily select a region of interest by referring to the information regarding candidates of a region of interest displayed on the display 110. In addition, in a case where only a portion of a frame is constituted by independent decoding tiles, the image decoding apparatus 10 may treat regions corresponding to the independent decoding tiles as candidates of a region of interest. In addition, the image decoding apparatus 10 may also perform control such that the display 110 displays the information regarding candidates of a region of interest in accordance with information indicating the sizes, positions, or both of regions that are capable of being decoded and displayed at the desired frame rate acquired by the rate acquiring unit 701. As a result, the user is able to easily select a region of interest in accordance with the regions that are capable of being decoded and displayed at the desired frame rate.

In addition, the image decoding apparatus 10 may send a notification of (or display) the information regarding candidates of a region of interest in accordance with priority levels set for respective regions by an image encoding apparatus (not illustrated). For example, in the case where the image encoding apparatus (not illustrated) sets priority levels on a tile-by-tile basis, the image decoding apparatus 10 determines, in accordance with the set priority levels, the sizes, positions, or both of regions that are capable of being decoded and displayed at the desired frame rate acquired by the rate acquiring unit 701. Then, the image decoding apparatus 10 may perform control such that the information regarding candidates of a region of interest is displayed on the display 110, in accordance with information indicating the determined sizes, positions, or both of the regions that are capable of being decoded and displayed. Here, the image encoding apparatus gives the magnitude of a value of a tmcts_id code in accordance with the priority levels, for example, in the TMCTS_SEI of Fig. 3(e), and as a result the image encoding apparatus is capable of causing information regarding the priority levels to be included in the code. In addition, the image encoding apparatus may insert information regarding the priority levels as a code using, for example, SEI handling information (user data) set by the user (for example, user_data_unregistered) other than the TMCTS_SEI. Then, similarly to as in the above-described method for sending a notification of candidates of a region of interest, the candidate setting unit 1101 illustrated in Fig. 11 acquires the information regarding the priority levels by decoding the TMCTS_SEI, and the image decoding apparatus 10 performs control such that the acquired information regarding the priority levels is displayed on the display 110. As a result, the user is able to easily select a region of interest by referring to the priority levels that have been set in advance on the encoding side.

Note that it has been described that the image decoding apparatus 10 is configured to set a region of interest in the case where the temporal layer level corresponding to the desired frame rate exceeds the entirety decoding level in the present embodiment; however, when to set a region of interest is not limited to this. That is, even when the temporal layer level corresponding to the desired frame rate is lower than or equal to the entirety decoding level, the image decoding apparatus 10 may set a region of interest. In addition, the image decoding apparatus 10 may also be configured to compare the temporal layer level corresponding to the desired frame rate with the entirety decoding level after setting a region of interest. That is, the image decoding apparatus 10 may determine the frame rate for the set region of interest to be a frame rate higher than or equal to the desired frame rate, and determine the frame rate for the other region in accordance with the frame rate for the region of interest and the performance information regarding the tile decoding unit 103. For example, in the case where the desired frame rate is 6 frames/s (corresponding to the temporal layer level 1), and the entirety decoding level is the temporal layer level 2, the frame rate for the region of interest may be determined to be 12 frames/s, and the frame rate for the other region may be determined to be 3 frames/s. In addition, the frame rate for the region of interest and the frame rate for the other region may also be determined in accordance with the number of tiles necessary to be decoded to display the set region of interest. For example, in the case where the number of tiles necessary to decode a region of interest is greater than a certain number, the image decoding apparatus 10 may reduce the entirety decoding level so that the entirety decoding level becomes lower than the temporal layer level determined in step S1001, and perform decoding and display.

### Third Embodiment

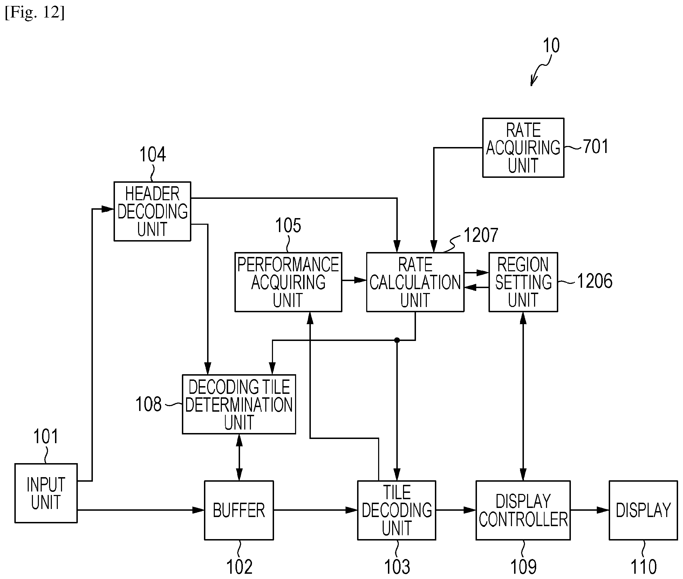

In the present embodiment, an image decoding apparatus 10 capable of setting a region of interest again in accordance with processing performance necessary to decode a region of interest at a desired frame rate and the processing performance of the tile decoding unit 103 will be described. In the following, the image decoding apparatus 10 according to the present embodiment will be described with reference to the drawings. First, the configuration of the image decoding apparatus 10 according to the present embodiment will be described using Fig. 12. Fig. 12 is a block diagram illustrating the configuration of the image decoding apparatus 10 according to the present embodiment. In Fig. 12, processing units having the same functions as those of the image decoding apparatus 10 illustrated in Fig. 1 of the first embodiment or Fig. 7 of the second embodiment are denoted by the same reference numerals, and description thereof will be omitted.

A region setting unit 1206 sets a region of interest. Then, the region setting unit 1206 differs from the region setting unit 106 of Fig. 1 in that the region setting unit 1206 has the function of setting candidates of a region of interest in accordance with a region change request output from a rate calculation unit 1207. In addition, the rate calculation unit 1207 calculates a frame rate to be used in the case where one entire frame of a moving image is displayed (in the case of entire-view display), and a frame rate to be used in the case where a region of interest within a frame is displayed (in the case of partial-view display). Then, the rate calculation unit 1207 differs from the rate calculation unit 107 of Fig. 1 in that the rate calculation unit 1207 outputs, to the region setting unit 1206, a region change request requesting changing of a region of interest in order to realize a frame rate set by the user for a region of interest.

In addition, similarly to as in the first embodiment, the tile decoding unit 103 of the image decoding apparatus 10 has processing performance with which it is possible to decode 72 tiles per second in the present embodiment. In addition, encoded data input to the input unit 101 of the image decoding apparatus 10 is substantially the same as the encoded data illustrated in Fig. 3(a) to 3H of the first embodiment, and tile division of the encoded data is also substantially the same as the tile division illustrated in Fig. 5A of the first embodiment. In addition, the number of temporal layer levels of the encoded data input to the input unit 101 is three in the present embodiment, similarly to as in that in the first embodiment and the second embodiment. In addition, the frame rate is 12 frames/s in the case where decoding is performed up to the temporal layer level 2, and the frame rate is 6 frames/s in the case where decoding is performed up to the temporal layer level 1 in the present embodiment, similarly to as in the first embodiment and the second embodiment. In addition, the frame rate is 1 frame/s in the case where decoding is performed only for the temporal layer level 0, similarly to as in the first embodiment.

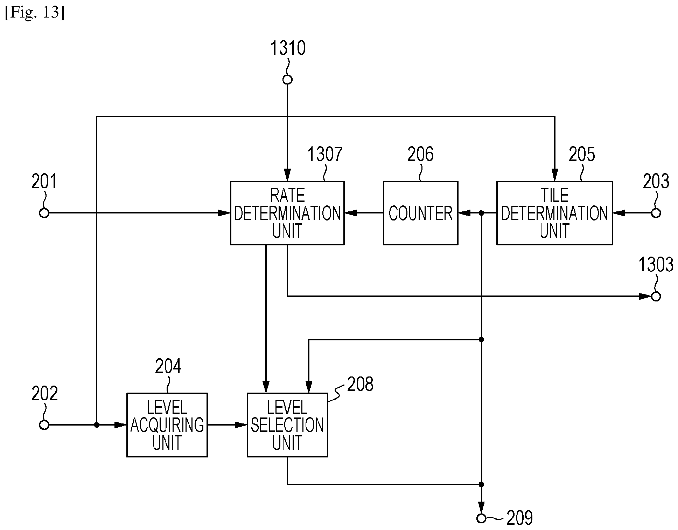

Next, the configuration of the rate calculation unit 1207 will be described in detail using Fig. 13. In Fig. 13, processing units having the same functions as the processing units of the rate calculation unit 107 illustrated in Fig. 2 of the first embodiment are denoted by the same reference numerals, and description thereof will be omitted. A rate determination unit 1307 differs from the rate determination unit 207 of the first embodiment in that the rate determination unit 1307 requests (specifies) changing of tiles to be decoded in the case where the processing performance of the tile decoding unit 103 is inadequate for tiles set to be decoded. In addition, information regarding a desired frame rate is input to a terminal 1310 from the rate acquiring unit 701.

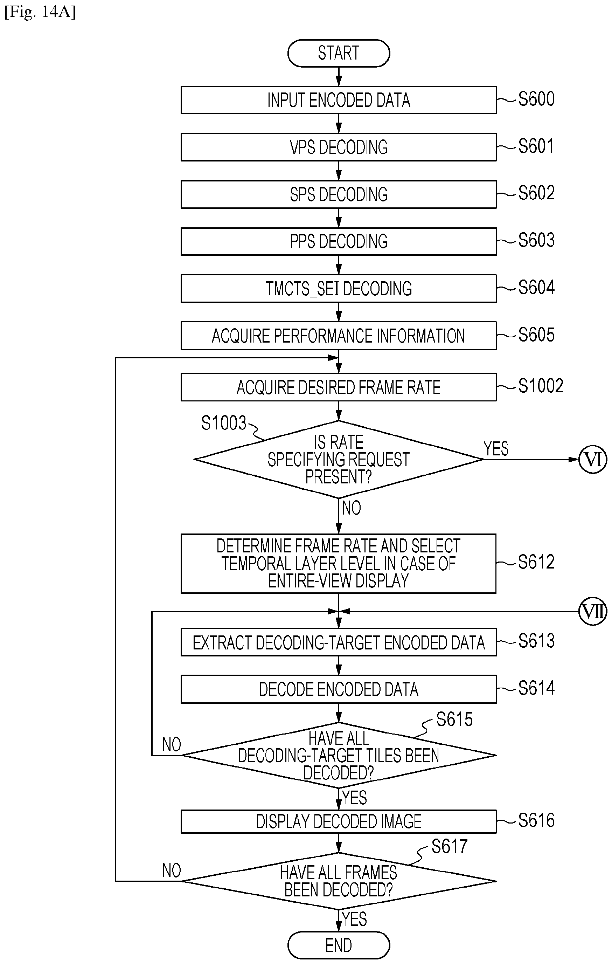

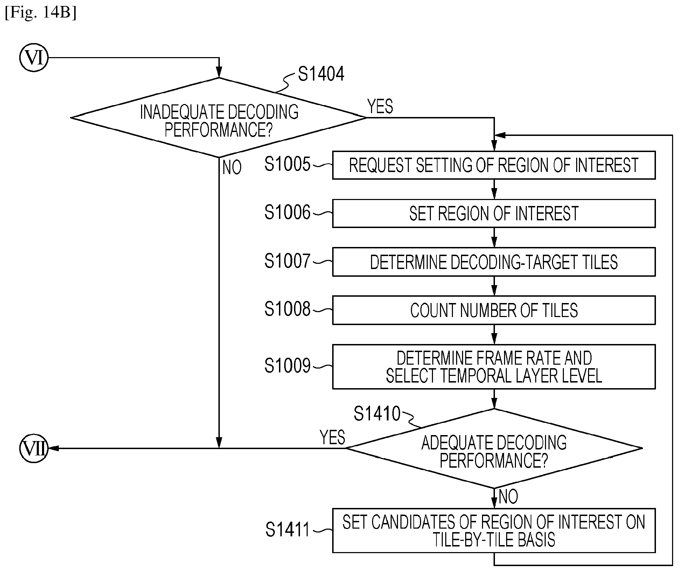

Next, a decoding processing operation of the image decoding apparatus 10 in the present embodiment will be described using Figs. 14A and 14B. Figs. 14A and 14B are a flowchart illustrating the decoding processing operation of the image decoding apparatus 10 according to the present embodiment. In Figs. 14A and 14B, steps having the same functions as those of the flowchart of Figs. 6A and 6B of the first embodiment or Figs. 10A and 10B of the second embodiment will be denoted by the same reference numerals, and description thereof will be omitted. Note that in the case where a desired frame rate has not been specified by the user in the present embodiment, the image decoding apparatus 10 performs decoding and display at the frame rate obtained for the temporal layer level 0. For the sake of description, it is assumed that a desired frame rate is not set at the beginning (before a decoding process starts).

In step S1003, similarly to as in step S1003 illustrated in Fig. 10A of the second embodiment, the rate calculation unit 1207 determines whether or not a rate specifying request has been acquired from the rate acquiring unit 701. In the case where a rate specifying request has not been acquired (NO in step S1003), the rate calculation unit 1207 determines that a frame rate has not been set by the rate acquiring unit 701, and the process proceeds to processing in step S612. Note that the processing in and after step S612 is substantially the same as the processing performed in and after step S612 illustrated in Fig. 6A of the first embodiment, and thus description thereof will be omitted. In contrast, in the case where a rate specifying request has been acquired (YES in step S1003), the rate calculation unit 1207 determines that a frame rate has been set by the rate acquiring unit 701, and the process proceeds to processing in step S1404.

In the following, regarding the case where the rate calculation unit 1207 determines in step S1003 that a rate specifying request has been acquired from the rate acquiring unit 701 (YES in step S1003), processing in and after S1404 will be described.

In step S1404, the rate calculation unit 1207 calculates processing performance needed when decoding-target tiles are decoded, and compares the calculated necessary processing performance with the processing performance of the tile decoding unit 103. Then, it is determined whether or not the processing performance of the tile decoding unit 103 is inadequate (whether or not the processing performance of the tile decoding unit 103 is lower than the necessary processing performance). In the case where the processing performance of the tile decoding unit 103 is inadequate (YES in step S1404), the process proceeds to step S1005. In contrast, in the case where the processing performance of the tile decoding unit 103 is adequate (NO in step S1404), the process proceeds to step S613.

First, a case will be described where it is determined in step S1404 that the processing performance of the tile decoding unit 103 is inadequate (YES in step S1404). In this case, processing in and after step S1005 is performed. Steps S1005 to S1009 are substantially the same as the processing performed in steps S1005 to S1009 illustrated in Fig. 10B of the second embodiment, and thus description thereof will be omitted. Then, the process proceeds to processing in step S1410 after the processing in step S1009 in the present embodiment.

In step S1410, the rate calculation unit 1207 calculates processing performance necessary to decode a region of interest, decoding-target tiles determined in step S1007, at the frame rate determined in step S1009. Then, the rate calculation unit 1207 compares the necessary processing performance with the processing performance of the tile decoding unit 103, and determines whether or not the processing performance of the tile decoding unit 103 is adequate (whether or not the processing performance of the tile decoding unit 103 is greater than or equal to the necessary processing performance). In the case where it is determined that the processing performance of the tile decoding unit 103 is adequate (YES in step S1410), the process proceeds to step S613. In contrast, in the case where it is determined that the processing performance of the tile decoding unit 103 is inadequate (NO in step S1410), the process proceeds to processing in step S1411.

In step S1411, the image decoding apparatus 10 performs processing for determining candidates of a region of interest. After the processing in step S1411, the process returns to the processing in step S1005, and the image decoding apparatus 10 performs processing for setting a region of interest again. In this manner, candidates of a region of interest are set in step S1411, and thus the user is able to easily set a region of interest by referring to candidates of a region of interest in the case of setting a region of interest again.

In the following, a specific example will be described using Figs. 14A and 14B. First, a case will be described where the rate acquiring unit 701 has been commanded to increase the frame rate by the user. As described above, the frame rate before specification of a frame rate and at the time when the decoding process starts is the frame rate obtained for the temporal layer level 0 (1 frame/s). Here, suppose that the image decoding apparatus 10 has been commanded by the user to increase the frame rate from 1 frame/s to a frame rate obtained for the temporal layer level 1 (6 frames/s).

Here, all tiles of a frame are determined by the tile determination unit 205 to be decoding-target tiles, and thus a count result obtained by the counter 206 for the number of tiles is 48. The rate determination unit 1307 acquires information indicating that a processing performance of 48 × 6 = 288 tiles/s is necessary in the case where the tiles counted by the counter 206 (48 tiles) are decoded at the desired frame rate (6 frames/s) acquired by the rate acquiring unit 701. In addition, the processing performance of the tile decoding unit 103 is 72 tiles/s in the present embodiment. As a result, the rate determination unit 1307 determines in step S1404 that the processing performance of the tile decoding unit 103 is inadequate (YES in step S1404), and the process proceeds to step S1005.

Processing in steps S1005 to S1009 is substantially the same as that performed in steps S1005 to S1009 of Fig. 10B. Here, in step S1006, the region setting unit 106 sets the region 501, the region 502, and the region 503 illustrated in Fig. 5B as regions of interest, and outputs region-of-interest information regarding the set regions of interest to the tile determination unit 205 via the terminal 203. Then, in step S1007, the tile determination unit 205 determines decoding-target tiles to be tiles having tile numbers 11, 12, 21, 22, 14, 15, 16, 24, 25, 26, 32, and 42. In step S1008, the counter 206 counts the number of the decoding-target tiles, and outputs information regarding the number of tiles (which is 12) to the rate determination unit 1307. In step S1009, the rate determination unit 1307 determines the frame rate for the regions of interest to be a desired frame rate (6 frames/s), and determines a temporal layer level for the regions of interest (the temporal layer level 1) in accordance with the frame rate determined for the regions of interest.

Then, in step S1410, the rate determination unit 1307 performs the following processing. That is, the rate determination unit 1307 acquires information regarding the number of tiles output from the counter 206 (12 tiles/frame), and information regarding the desired frame rate acquired by the rate acquiring unit 701 (6 frames/s) via the terminal 1310. Then, the rate determination unit 1307 determines the processing performance necessary to decode the regions of interest at the desired frame rate to be 12 × 6 = 72 tiles/s in accordance with the number of tiles (12 tiles/frame) and the desired frame rate (6 frames/s). That is, since the processing performance of the tile decoding unit 103 is 72 tiles/s and the necessary processing performance is 72 tiles/s, the rate determination unit 1307 determines in step S1410 that the processing performance of the tile decoding unit 103 is adequate, and the process proceeds to step S613. Furthermore, in the processing in and after step S613, the image decoding apparatus 10 decodes the tiles corresponding to the regions of interest up to the temporal layer level 1, and performs control such that the display 110 performs display at the desired frame rate (6 frames/s).

Next, a case will be described where the rate acquiring unit 701 has been commanded to further increase the frame rate by the user. Here, suppose that the image decoding apparatus 10 has been commanded to increase the frame rate from 6 frames/s to a frame rate obtained for the temporal layer level 2 (12 frames/s).

Here, in the above-described step S1008, a count result obtained by the counter 206 for the number of tiles is 12. The rate determination unit 1307 acquires information indicating that a processing performance of 12 × 12 = 144 tiles/s is necessary in the case where the tiles counted by the counter 206 (12 tiles) are decoded at a desired frame rate (12 frames/s) acquired by the rate acquiring unit 701. In addition, the processing performance of the tile decoding unit 103 is 72 tiles/s in the present embodiment. As a result, the rate determination unit 1307 determines in step S1404 that the processing performance of the tile decoding unit 103 is inadequate (YES in step S1404), and the process proceeds to step S1005.

Processing in steps S1005 to S1009 is substantially the same as that performed in steps S1005 to S1009 of Fig. 10B. Here, in step S1006, the region setting unit 106 sets only the region 502 illustrated in Fig. 5B as a region of interest, and outputs region-of-interest information regarding the set region of interest to the tile determination unit 205 via the terminal 203. Then, in step S1007, the tile determination unit 205 determines decoding-target tiles to be tiles having tile numbers 14, 15, 16, 24, 25, and 26. In step S1008, the counter 206 counts the number of the decoding-target tiles, and outputs information regarding the number of tiles (which is 6) to the rate determination unit 1307. In step S1009, the rate determination unit 1307 determines the frame rate for the region of interest to be the desired frame rate (12 frames/s), and determines a temporal layer level for the region of interest (the temporal layer level 2) in accordance with the frame rate determined for the region of interest.

Then, in step S1410, the rate determination unit 1307 acquires information regarding the number of tiles output from the counter 206 (6 tiles/frame), and information regarding the desired frame rate acquired by the rate acquiring unit 701 (12 frames/s). Then, the rate determination unit 1307 determines the processing performance necessary to decode the region of interest at the desired frame rate to be 6 × 12 = 72 tiles/s in accordance with the number of tiles (6 tiles/frame) and the desired frame rate (12 frames/s). That is, since the processing performance of the tile decoding unit 103 is 72 tiles/s and the necessary processing performance is 72 tiles/s, the rate determination unit 1307 determines in step S1410 that the processing performance of the tile decoding unit 103 is adequate, and the process proceeds to step S613. Furthermore, in the processing in and after step S613, the image decoding apparatus 10 decodes the tiles corresponding to the region of interest up to the temporal layer level 2, and performs control such that the display 110 performs display at the desired frame rate (12 frames/s).

Note that in step S1006, in the case where the region of interest specified by the user extends over six tiles or more, the necessary processing performance exceeds the processing performance of the tile decoding unit 103 (72 tiles/s). In such a case, since it is determined in step S1410 that the processing performance of the tile decoding unit 103 is inadequate (NO in step S1410), the process proceeds to step S1411. In step S1411, the display controller 109 performs control such that information regarding a region of six tiles is displayed on the display 110. Before the processing is performed in step S1411, even in the case where a notification is sent in step S1005 that the moving image is incapable of being decoded and displayed at the desired frame rate, an estimation of the size of a region with which decoding and display are possible is not obtained, and it is difficult to set a reduced region of interest. However, since the image decoding apparatus 10 performs the processing in step S1411, the user is able to observe the size of a region of interest with which the moving image is capable of being decoded and displayed at the desired frame rate.

In addition, in step S1411, the region setting unit 1206 may perform processing in which tiles whose portions overlapping (included in) the regions of interest are smaller than a certain size among the tiles over which the regions of interest extend, the tiles being acquired in step S1006, are removed from candidates of a region of interest. Here, the tiles having the tile numbers 11, 12, 14, 16, 24, and 26 among the tiles corresponding to the region 501, the region 502, and the region 503 have portions that overlap the regions of interest and whose sizes are smaller than a certain size (for example, smaller than half the size of one tile). Thus, in step S1411, the region setting unit 1206 may remove tiles whose portions overlapping the regions of interest are small as above, and may set only the tiles having the tile numbers 12, 22, 15, 25, 32, and 42 as candidates of a region of interest.

In addition, in step S1411, the display controller 109 may also perform control such that boundaries between tiles within a frame are displayed on the display 110. In this manner, by displaying boundaries between tiles, the user is able to observe boundaries between tiles within a frame, and may easily set a region of interest on a tile-by-tile basis.

With the above-described configuration and operations, the image decoding apparatus 10 becomes capable of decoding, at an appropriate frame rate, a moving image on which temporal scalable coding has been performed in the present embodiment.

In addition, the image decoding apparatus 10 is capable of appropriately determining either entire-view display, by which an entire frame is displayed, or partial-view display, by which a region of interest is displayed, in accordance with the processing performance of the image decoding apparatus 10 in the present embodiment.

In addition, in the present embodiment, the image decoding apparatus 10 may set a region of interest again in the case where the processing performance necessary to decode a certain region of interest at a desired frame rate exceeds the processing performance of the image decoding apparatus 10. In addition, when a region of interest is set again, displaying of regions based on the processing performance, boundaries between tiles, or both makes it possible for the user to easily set a region of interest again. In addition, when a region of interest is set again, candidates of a region of interest are set in accordance with overlapping of a region of interest and tiles, which makes it possible to easily perform decoding-display processing within a range that does not exceed the processing performance.

Note that a case has been described in the present embodiment where all of the selected regions of interest are decoded at the same frame rate; however, frame rates are not limited to this. For example, as a matter of course, frame rates that differ from each other may be set for the respective regions of interest.

### Fourth Embodiment

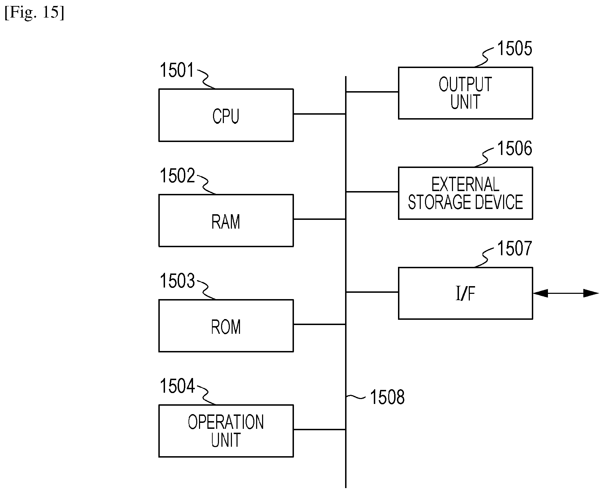

It has been described in the above-described embodiments that the processing units illustrated in Fig. 1, Fig. 2, Fig. 7, Fig. 8, Fig. 11, Fig. 12, and Fig. 13 are configured by hardware. However, processing performed by the processing units illustrated in these drawings may also be formed as a computer program. In the following, the present embodiment will be described using Fig. 15. Fig. 15 is a block diagram illustrating an example of a hardware configuration of a computer capable of being applied to the image decoding apparatuses 10 according to the above-described embodiments.

A central processing unit (CPU) 1501 controls the entire computer using a computer program and data stored in a random-access memory (RAM) 1502 and a read-only memory (ROM) 1503, and executes the above-described processes performed by the image decoding apparatus 10 according to each of the above-described embodiments. That is, the CPU 1501 serves as the processing units illustrated in Fig. 1, Fig. 2, Fig. 7, Fig. 8, Fig. 11, Fig. 12, and Fig. 13.

The RAM 1502 has an area for temporarily storing, for example, a computer program or data loaded from an external storage device 1506, and data acquired from the outside via an interface (I/F) 1507. Furthermore, the RAM 1502 has a work area used when the CPU 1501 performs various types of processing. That is, the RAM 1502 may be, for example, assigned as an image memory (picture memory), or is capable of providing other various types of areas as necessary.

The ROM 1503 stores, for example, setting data of this computer, and a boot program. An operation unit 1504 includes a keyboard, a mouse, or the like, and is capable of inputting various types of commands to the CPU 1501 by the user of the computer performing operations. An output unit 1505 outputs a processing result obtained by the CPU 1501. In addition, the output unit 1505 includes, for example, a liquid crystal display, and displays a processing result obtained by the CPU 1501.

The external storage device 1506 is a mass information storage device, notably a hard disk drive device. The external storage device 1506 stores an operating system (OS), and a computer program for causing the CPU 1501 to realize the functions of the various units illustrated in Fig. 15. Furthermore, the external storage device 1506 may also store various types of image data serving as processing targets.

A computer program or data stored in the external storage device 1506 is loaded into the RAM 1502 as necessary in accordance with control performed by the CPU 1501, and is subjected to processing performed by the CPU 1501. A network such as a local-area network (LAN) or the Internet, and other devices such as a projection device and a display apparatus are capable of being connected to the I/F 1507. This computer is capable of acquiring or sending various types of information via the I/F 1507. A bus that connects the above-described various units with each other is denoted by 1508.

For the above-described structural operation, the operations described in the above-described flowcharts are controlled by the CPU 1501 taking a leading role.

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments.

The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2015-001682, filed January 7, 2015.

## Claims

1. An image decoding apparatus which decodes encoded data obtained by performing hierarchical coding on a moving image including one or more images using a plurality of temporal layers, the image decoding apparatus comprising:
a first acquisition unit (108) configured to acquire information regarding a number of tiles included in a region of interest that is a partial region in the moving image;
a second acquisition unit (107) configured to acquire information regarding frame rates of the moving image corresponding to the plurality of temporal layers used in the hierarchical coding;
a third acquisition unit (105) configured to acquire information regarding a number of tiles that the image decoding apparatus is capable of processing within a unit time period;
a determination unit (207) configured to determine, among the frame rates corresponding to the plurality of temporal layers, a frame rate lower than or equal to a frame rate calculated from the number of tiles included in the region of interest and the number of tiles that the image decoding apparatus is capable of processing within the unit time period, as a frame rate for the region of interest; and
a decoding unit (103) configured to acquire encoded data corresponding to the region of interest and decode the encoded data corresponding to the region of interest, in accordance with the frame rate determined by the determination unit.

2. The image decoding apparatus according to Claim 1, wherein the determination unit (207) determines either of the frame rates acquired by the frame rates information acquisition unit and corresponding to the plurality of temporal layers to be a frame rate used in entire-view display, in which the one or more images capable of being decoded are entirely displayed, or partial-view display, in which the region of interest is displayed.

3. The image decoding apparatus according to Claim 2, wherein the determination unit (207) determines a frame rate used in the entire-view display in a case where the region of interest is not specified, and determines a frame rate used in the partial-view display in a case where the region of interest is specified and where a region that is not the entirety but a part of the one or more images capable of being decoded is specified as the region of interest.

4. A method of decoding encoded data obtained by performing hierarchical coding on a moving image including one or more images using a plurality of temporal layers, the method comprising:
acquiring (603) information regarding a number of tiles included in a region of interest that is a partial region in the moving image;
acquiring (608) information regarding frame rates of the moving image corresponding to the plurality of temporal layers used in the hierarchical coding;
acquiring (605) information regarding a number of tiles that the image decoding apparatus is capable of processing within a unit time period;
determining (610), among the frame rates corresponding to the plurality of temporal layers, a frame rate lower than or equal to a frame rate calculated from the number of tiles included in the region of interest and the number of tiles that the image decoding apparatus is capable of processing within the unit time period, as a frame rate for the region of interest; ;
acquiring (613) encoded data corresponding to the region of interest and decoding (614) the encoded data corresponding to the region of interest, in accordance with the determined frame rate.

5. A program which, when run on a device, causes the device to execute a method according to claim 4.

## Patentansprüche

1. Bilddekodiervorrichtung, die kodierte Daten dekodiert, die durch Durchführen von hierarchischem Kodieren an einem ein oder mehrere Bilder beinhaltenden Bewegtbild unter Verwendung von mehreren zeitlichen Schichten erhalten wurden, wobei die Bilddekodiervorrichtung umfasst:
eine erste Erfassungseinheit (108), die konfiguriert ist, Information hinsichtlich einer Anzahl Kacheln zu erfassen, die in einer Betrachtungsregion enthalten sind, die eine Teilregion im Bewegtbild ist;
eine zweite Erfassungseinheit (107), die konfiguriert ist, Information hinsichtlich Einzelbildraten des Bewegtbilds zu erfassen, die den im hierarchischem Kodieren verwendeten mehreren zeitlichen Schichten entsprechen;
eine dritte Erfassungseinheit (105), die konfiguriert ist, Information hinsichtlich einer Anzahl Kacheln zu erfassen, die die Bilddekodiervorrichtung innerhalb einer Einheitszeitspanne verarbeiten kann;
eine Bestimmungseinheit (207), die konfiguriert ist, unter den Einzelbildraten, die den mehreren zeitlichen Schichten entsprechen, als Einzelbildrate für die Betrachtungsregion eine Einzelbildrate zu bestimmen, die niedriger als oder gleich hoch wie eine Einzelbildrate ist, die aus der Anzahl in der Betrachtungsregion enthaltener Kacheln und der Anzahl Kacheln, die die Bilddekodiervorrichtung innerhalb der Einheitszeitspanne verarbeiten kann, berechnet wird; sowie
eine Dekodiereinheit (103), die konfiguriert ist, der Betrachtungsregion entsprechende kodierte Daten zu erfassen und die der Betrachtungsregion entsprechenden kodierten Daten gemäß der durch die Bestimmungseinheit bestimmten Einzelbildrate zu dekodieren.

2. Bilddekodiervorrichtung nach Anspruch 1,
wobei die Bestimmungseinheit (207) eine der Einzelbildraten, die durch die Einzelbildrateninformationserfassungseinheit erfasst wurden und den mehreren zeitlichen Schichten entsprechen, bestimmt als Einzelbildrate zur Verwendung in einer Gesamtansichtsanzeige, in der das eine oder die mehreren Bilder, die dekodiert werden können, vollständig angezeigt werden, oder einer Teilansichtsanzeige, in der die Betrachtungsregion angezeigt wird.

3. Bilddekodiervorrichtung nach Anspruch 2,
wobei die Bestimmungseinheit (207) eine Einzelbildrate zur Verwendung in einer Gesamtansichtsanzeige bestimmt, falls die Betrachtungsregion nicht spezifiziert wird, und eine Einzelbildrate zur Verwendung in einer Teilansichtsanzeige bestimmt, falls die Betrachtungsregion spezifiziert wird und eine Region, die nicht die Gesamtheit, sondern ein Teil des einen oder der mehreren Bilder ist, die dekodiert werden können, als die Betrachtungsregion spezifiziert wird.

4. Verfahren zum Dekodieren von kodierten Daten, die durch Durchführen von hierarchischem Kodieren an einem ein oder mehrere Bilder beinhaltenden Bewegtbild unter Verwendung von mehreren zeitlichen Schichten erhalten wurden, wobei das Verfahren umfasst:
Erfassen (603) von Information hinsichtlich einer Anzahl Kacheln, die in einer Betrachtungsregion enthalten sind, die eine Teilregion im Bewegtbild ist;
Erfassen (608) von Information hinsichtlich Einzelbildraten des Bewegtbilds, die den im hierarchischem Kodieren verwendeten mehreren zeitlichen Schichten entsprechen;
Erfassen (605) von Information hinsichtlich einer Anzahl Kacheln, die die Bilddekodiervorrichtung innerhalb einer Einheitszeitspanne verarbeiten kann;
Bestimmen (610) unter den Einzelbildraten, die den mehreren zeitlichen Schichten entsprechen, von einer Einzelbildrate als Einzelbildrate für die Betrachtungsregion, die niedriger als oder gleich hoch wie eine Einzelbildrate ist, die aus der Anzahl in der Betrachtungsregion enthaltener Kacheln und der Anzahl Kacheln, die die Bilddekodiervorrichtung innerhalb der Einheitszeitspanne verarbeiten kann, berechnet wird; sowie
Erfassen (613) von der Betrachtungsregion entsprechenden kodierten Daten und Dekodieren (614) der der Betrachtungsregion entsprechenden kodierten Daten gemäß der bestimmten Einzelbildrate.

5. Programm, das bei Ausführung auf einer Einrichtung diese veranlasst, ein Verfahren nach Anspruch 4 auszuführen.

## Revendications

1. Appareil de décodage d'image qui décode des données codées obtenues par une application d'un codage hiérarchique à une image animée comprenant une ou plusieurs images au moyen d'une pluralité de couches temporelles, l'appareil de décodage d'image comprenant :
une première unité d'acquisition (108) configurée pour acquérir des informations concernant un nombre de pavés compris dans une région d'intérêt qui est une région partielle de l'image animée ;
une deuxième unité d'acquisition (107) configurée pour acquérir des informations concernant des fréquences de trames de l'image animée correspondant à la pluralité de couches temporelles utilisées pour le codage hiérarchique ;
une troisième unité d'acquisition (105) configurée pour acquérir des informations concernant un nombre de pavés que l'appareil de décodage d'image peut traiter sur une période de temps unitaire ;
une unité de détermination (207) configurée pour déterminer, parmi les fréquences de trames correspondant à la pluralité de couches temporelles, une fréquence de trames inférieure ou égale à une fréquence de trames calculée à partir du nombre de pavés compris dans la région d'intérêt et du nombre de pavés que l'appareil de décodage d'image peut traiter sur la période de temps unitaire, en tant que fréquence de trames de la région d'intérêt ; et
une unité de décodage (103) configurée pour acquérir des données codées correspondant à la région d'intérêt et pour décoder les données codées correspondant à la région d'intérêt, conformément à la fréquence de trames déterminée par l'unité de détermination.

2. Appareil de décodage d'image selon la revendication 1, dans lequel l'unité de détermination (207) détermine n'importe laquelle des fréquences de trames acquises par l'unité d'acquisition d'informations de fréquences de trames et correspondant à la pluralité de couches temporelles comme étant une fréquence de trames utilisée lors d'un affichage de vue complète, dans lequel les une ou plusieurs images pouvant être décodées sont entièrement affichées, ou lors d'un affichage de vue partielle, dans lequel la région d'intérêt est affichée.

3. Appareil de décodage d'image selon la revendication 2, dans lequel l'unité de détermination (207) détermine une fréquence de trames utilisée lors de l'affichage de vue complète dans un cas dans lequel la région d'intérêt n'est pas spécifiée, et détermine une fréquence de trames utilisée lors de l'affichage de vue partielle dans un cas dans lequel la région d'intérêt est spécifiée et dans lequel une région qui ne constitue pas la totalité mais une partie des une ou plusieurs images pouvant être décodées est spécifiée en tant que la région d'intérêt.

4. Procédé de décodage de données codées obtenues par application d'un codage hiérarchique à une image animée comprenant une ou plusieurs images au moyen d'une pluralité de couches temporelles, le procédé comprenant les étapes consistant à :
acquérir (603) des informations concernant un nombre de pavés compris dans une région d'intérêt qui est une région partielle de l'image animée ;
acquérir (608) des informations concernant des fréquences de trames de l'image animée correspondant à la pluralité de couches temporelles utilisées pour le codage hiérarchique ;
acquérir (605) des informations concernant un nombre de pavés que l'appareil de décodage d'image peut traiter sur une période de temps unitaire ;
déterminer (610), parmi les fréquences de trames correspondant à la pluralité de couches temporelles, une fréquence de trames inférieure ou égale à une fréquence de trames calculée à partir du nombre de pavés compris dans la région d'intérêt et du nombre de pavés que l'appareil de décodage d'image peut traiter sur la période de temps unitaire, en tant que fréquence de trames de la région d'intérêt ;
acquérir (613) des données codées correspondant à la région d'intérêt et décoder (614) les données codées correspondant à la région d'intérêt, conformément à la fréquence de trames déterminée.

5. Programme qui, lorsqu'il est exécuté sur un dispositif, amène le dispositif à mettre en œuvre un procédé selon la revendication 4.
